(19)

**Europäisches Patentamt**
**European Patent Office**
**Office européen des brevets**

(11) **EP 4 625 235 A1**

(12) **EUROPEAN PATENT APPLICATION**

(43) Date of publication:
**01.10.2025 Bulletin 2025/40**

(21) Application number: **25166320.9**

(22) Date of filing: **26.03.2025**

(51) International Patent Classification (IPC):
**G06F 30/17** *(2020.01)* **G06F 30/23** *(2020.01)*
**G06F 111/06** *(2020.01)* **G06F 119/14** *(2020.01)*

(52) Cooperative Patent Classification (CPC):
**G06F 30/23; G06F 30/17;** G06F 2111/06;
G06F 2119/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 US 202463570035 P**

(71) Applicant: **DASSAULT SYSTEMES AMERICAS CORP.**
**Waltham, MA 02451 (US)**

(72) Inventors:
• **JURINIC, Anton Stjepan**
  **42679 Västra Frölunda (SE)**
• **WITTENDORF PEDERSEN, Claus Bech**
  **22559 Hamburg (DE)**

(74) Representative: **Bandpay & Greuter**
**11, rue Christophe Colomb**
**75008 Paris (FR)**

(54) **SUPPRESSION OF POST-BUCKLING BEHAVIOR IN OPTIMIZATION USING ADDED ARTIFICIAL FORCES**

(57) Embodiments determine optimized designs of real-world objects. A computer-based model representing a real-world object is defined and the computer-based model is modified to include at least one artificial force. The at least one artificial force is defined as a function of physics-based behavior. The real-world object is iteratively optimizing with respect to load using the computer-based model modified. A result of the iterative optimization is an optimized design of the real-world object.

FIG. 14B

EP 4 625 235 A1

## Description

RELATED APPLICATION

This application claims the benefit of U.S. Provisional Application No. 63/570,035, filed on March 26, 2024. The entire teachings of the above application are incorporated herein by reference.

BACKGROUND

A number of existing product and simulation systems are offered on the market for the design and simulation of objects (e.g., components, parts, and assemblies of components or parts, among other examples) in a modeling space (e.g., a three-dimensional (3D) modeling space). Such systems typically employ computer-aided design (CAD) and computer-aided engineering (CAE) programs. These systems allow a user to construct, manipulate, and simulate complex 3D models of objects or assemblies of objects, e.g., real-world objects. CAD and CAE systems, thus, provide a representation of modeled objects using edges, lines, faces, polygons, or closed volumes. Lines, edges, faces, polygons, and closed volumes may be represented in various manners, e.g., with non-uniform rational basis-splines (NURBS).

CAD systems manage parts or assemblies of parts of modeled objects, which are mainly specifications of geometry. In particular, CAD files contain specifications, from which geometry is generated. From geometry, a representation is generated. Specifications, geometries, and representations may be stored in a single CAD file or multiple CAD files. CAD systems include graphic tools for representing the modeled objects to designers; these tools are dedicated to the display of complex objects. For example, an assembly may contain thousands of parts, i.e., components. A CAD system can be used to manage models of objects, which are stored in electronic files.

CAD and CAE systems use computer-based models, e.g., CAD models, CAE models, and finite element models, to represent objects. A computer-based model may be programmed in such a way that the model has the properties (e.g., physical, material, or other physics based) of the underlying real-world object or objects that the model represents. When a computer-based model is programmed in such a way, it may be used to perform simulations of the object that the model represents. For example, a finite element model (FEM) may be used to represent the interior cavity of a vehicle, the acoustic fluid surrounding a structure, and any number of real-world objects and systems. When a given model represents an object and is programmed accordingly, it may be used to simulate the real-world object itself. For example, a FEM representing a stent may be used to simulate the use of the stent in a real-life medical setting.

Computer-based models may be used to improve the design of the objects that the models represent. Design improvements may be identified through use of optimization techniques that run a series of simulations in order to identify changes to the design of the model and thus, the underlying object that the model represents.

SUMMARY

While optimization methods for designing and optimizing real-world objects exist, these existing methods can benefit from improvements. Embodiments provide such improvements. Embodiments are directed toward functionality that determines optimized designs for real-world objects through adding one or more artificial forces to computer-based models representing the real-world objects.

One such example embodiment is directed to a computer-implemented method for determining an optimized design of a real-world object. Such a method is performed by a processor and begins by defining, in memory of the processor, a computer-based model representing a real-world object. The processor modifies the computer-based model to include at least one artificial force, wherein the at least one artificial force is defined as a function of physics-based behavior. The method continues by iteratively optimizing the real-world object with respect to load using the computer-based model modified. A result of the iteratively optimizing is an optimized design of the real-world object.

In embodiments, the computer-based model can be any computer-based model known in the art. For instance, according to an embodiment, the computer-based model is a finite element model, a boundary element method, a finite difference method, a finite volume method, or a discrete element method.

According to an embodiment, the iteratively optimizing includes the processor performing a simulation using the computer-based model modified and, based on a result of the simulation, evaluating compliance of a value of a property of the real-world object with respect to a design parameter. Responsive to the evaluating determining the value of the property complies with the design parameter, the method determines the computer-based model modified represents the optimized design of the real-world object. Responsive to the evaluating determining the value of the property does not comply with the design parameter, the method iterates: (i) updating the computer-based model modified, (ii) performing a simulation using the updated computer-based model modified, and (iii) based on a result of the simulation performed using the updated computer-based model modified, evaluating compliance of the value of the property of the real-world object with respect to the design parameter, until the evaluating determines the value of the property complies with the design parameter.

In an embodiment, the iteratively optimizing includes the processor performing a simulation using the computer-based model modified. According to one such embodiment, performing the simulation includes applying the load to the computer-based model modified, determining a value of the physics-based behavior of the computer-based model caused by the load applied, and based on the value of the physics-based behavior determined, applying the at least one artificial force to the computer-based model modified. In an embodiment, applying the at least one artificial force includes, responsive to the value of the physics-based behavior determined exceeding a threshold, counteracting a deformation in the computer-based model modified.

In a further embodiment, the iteratively optimizing includes the processor, solving for a primal solution of equilibrium for the computer-based model modified, determining a design response and at least one corresponding sensitivity with respect to a design variable of the computer-based model modified, and optimizing the real-world object using the computer-based model modified, the determined design response, and the at least one corresponding sensitivity. In such an embodiment, a result of the optimizing is a converged design representing the optimized design of the real-world object or a non-compliant solution. Responsive to the result of the optimizing being a non-compliant solution, an embodiment modifies the at least one artificial force and iterates the solving, determining, and optimizing using the at least one artificial force modified.

In an embodiment the at least one artificial force is configured to counter a deformation in the computer-based model modified responsive to a value of the physics-based behavior of the real-world object exceeding a threshold value.

In a further embodiment, the physics-based behavior comprises at least one of: a displacement, a velocity, and an acceleration.

Yet another embodiment includes determining a buckling point within the real-world object.

According to an embodiment, the at least one artificial force is configured to suppress a post-buckling response of the real-world object.

Another embodiment is directed to a system for automatically determining an optimized design of a real-world object. The system includes a processor and a memory with computer code instructions stored thereon. In such an embodiment, the processor and the memory, with the computer code instructions, are configured to cause the system to implement any embodiments, or combination of embodiments, described herein.

In another embodiment, a computer program product includes a non-transitory computer-readable medium having computer program instructions stored thereon. The instructions, when executed by a processor, cause the processor to implement any embodiments or combination of embodiments described herein.

It is noted that embodiments of the method, system, and computer program product may be configured to implement any embodiments or combination of embodiments described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIGs. 1A and 1B illustrate global buckling of a physical system.

FIGs. 1C and 1D illustrate global buckling of a physical system where an artificial force is added according to an embodiment.

FIG. 2 is a flow diagram illustrating a computer-implemented method for determining an optimized design of a real-world object by adding one or more artificial forces, according to an embodiment.

FIGs. 3A-C are plots showing suppression of physical post-buckling of a physical system using added internal artificial forces, according to an embodiment.

FIG. 4 shows a general continuum of a physical system, and the corresponding equilibrium applied to the external loadings, according to an embodiment.

FIG. 5 shows a general continuum of a physical system having added artificial forces for suppressing the post-buckling response, according to an embodiment.

FIG. 6 is a flow diagram illustrating an iterative design process that adds artificial forces according to an embodiment.

FIG. 7 shows equations for determining a solution of a physical system having added artificial forces, according to an embodiment.

FIGs. 8A-C are plots illustrating example characteristics for added artificial forces in a post-buckling range, according to an embodiment.

FIG. 9 shows equations for determining a primal solution according to an embodiment.

FIG. 10A shows equations for an adjoint method for sensitivities of design responses, according to an embodiment.

FIG. 10B shows equations for an adjoint method for sensitivities of a design response with respect to a design variable according to an embodiment.

FIG. 11 shows equations for a Lagrange multiplier $\{\lambda\}$ adjoint system according to an embodiment.

FIG. 12 illustrates equations for a direct method for determining sensitivities of design responses in an embodiment.

FIG. 13 shows equations for determining direct derivatives according to an embodiment.

FIGs. 14A and 14B are plots illustrating optimization setups according to an embodiment.

FIGs. 15A-D show example models for topology optimization for a physical beam system, according to an embodiment.

FIG. 16 shows a model of the beam system from FIGs. 15A - 15D with added artificial forces according to an embodiment.

FIG. 17A is a plot of force versus displacement for a beam system where artificial forces are not applied and where artificial forces are applied according to an embodiment.

FIGs. 17B and 17C show resulting structural responses for an initial beam design and a beam design optimized according to an embodiment.

FIGs. 18A-C are plots illustrating optimization iteration history for an embodiment implemented using added artificial forces.

FIG. 19A illustrates results for a geometrical linear optimized design.

FIG.19B illustrates results for a geometrical non-linear optimized design according to an embodiment.

FIG. 20A is a plot of force versus displacement for a beam system where artificial forces are not applied and where artificial forces are applied according to an embodiment.

FIGs. 20B and 20C show resulting structural responses for an initial beam design and a beam design optimized according to an embodiment.

FIGs. 21A and 21B are plots of optimization iteration history for embodiments.

FIG. 22A illustrates results for a geometrical linear optimized design.

FIG. 22B illustrates results for a geometrical non-linear optimized design according to an embodiment.

FIG. 23 is a simplified block diagram of a computer system in which embodiments may be implemented.

FIG. 24 is a simplified block diagram of a computer network environment in which embodiments may be implemented.

## DETAILED DESCRIPTION

A description of example embodiments follows.

Embodiments provide functionality for determining optimized designs of real-world objects. An embodiment suppresses post-buckling behavior in an optimization by using added artificial forces, e.g., adding an artificial force to a computer-based model representing a real-world object. According to an embodiment, the artificial force is configured to counteract a deformation in the computer-based model representing the real-world object. In an embodiment, counteracting the deformation allows an optimization procedure to converge to a solution that provides an optimized design of the real-world object.

For many optimization applications (e.g., thin-walled structures in aerospace applications), a design driver for the optimization is the global buckling load carrying capacity, i.e., how much load can a structure handle before it begins to buckle under the load. This buckling load carrying capacity frequently depends upon small imperfections (e.g., imperfections caused by manufacturing uncertainties), material non-linearities (e.g., plasticity), and a pre-buckling pattern for the structure. Therefore, geometrical non-linear modeling is helpful for capturing these influences, and determining the primal solution in the post-buckling range is challenging. Hence, embodiments provide a novel approach for sensitivity-based optimization, that captures the global buckling point in the modeling for the optimization, but artificially suppresses the post-buckling range for the optimization by using added artificial added forces.

Amongst other examples, embodiments can benefit simulations in the aerospace industry and defense sector, as these industries typically apply large deformation non-linear finite element modeling to obtain physically correct results for the pre-buckling point and the maximum bucking point. Further, many of the models for these applications are exposed to significant external loading. Embodiments disclosed herein allow these industrial applications to simulate external loading, and further enable determining the pre-bucking point and the maximum buckling point. Embodiments provide an iterative optimization workflow that simulates the pre-buckling and maximum buckling point for the primal solution.

An advantage of embodiments disclosed herein is that geometrical non-linear modeling for large displacements can simulate the force-displacement curve for the pre-buckling range, the global buckling point, and the post-buckling range. Global buckling point calculation frequently includes calculating various small imperfections, material non-linearities, and pre-buckling pattern for the structure. Frequently, the industrial target is to increase the global buckling point when considering these modeling features. Both theoretically and numerically, post-buckling optimization is challenging due to highly non-linear behavior and a lack of uniqueness for the forces in the force-displacement curves. Further, global buckling optimization is challenging due to the challenges in both the modeling and the solving for the post-buckling. As such, embodiments present an approach that adds artificial forces to suppress the response of the post-buckling range, where the pre-buckling responses and global buckling response are not suppressed so these responses can still be applied in an optimization. Embodiments can also be applied to any sensitivity based structural optimization disciplines known to those of skill in the art, such as topology optimization, shape optimization, sizing optimization, and bead optimization, amongst other examples.

Buckling And Geometrical Non-linear Optimization Using Arc-Length Method

An existing solution to address buckling during optimization solves for the post-buckling response for the geometrically non-linear analysis optimization by using the arc-length method. The arc-length method enforces the equilibrium to converge along an arc. Thereby, the primal solution for the post-buckling range can be determined even when the stiffness or global operator slope is zero or negative definite.

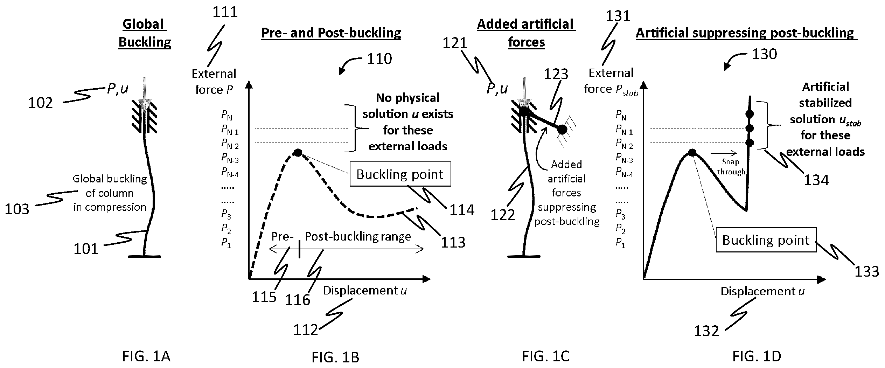

The arc-length method will decrease the external loading in the post-buckling range when the stiffness slope is zero or negative definite, as shown in FIG. 1B described below. Thereby, the arc-length analysis method cannot reach the final artificial loading in the optimization, whereas embodiments suppress the post-buckling, as shown in FIG. 1C and FIG. 1D described below.

Buckling And Geometrical Non-Linear Optimization Using Prescribed Displacements

Another existing solution for buckling and geometrical non-linear optimization employs prescribed displacements. To implement such functionality, the post-buckling method for the geometrically non-linear analysis optimization is solved using prescribed displacements instead of external loading steering the primal solution. Thereby, the primal solution, including the force in FIG. 1B described below, is uniquely determined for a given prescribed displacement.

In contrast, embodiments allow the primal solution, including the displacement in FIG. 1D described below, to be uniquely determined for a given external loading. Problematically, prescribed displacement modeling is not of interest for many modeling applications because many practical applications are subject to external force loading for realistic modeling.

Buckling Optimization Using Koiter's Method

Another existing approach implements gradient post-buckling optimization by applying the Koiter's asymptotic method where the so-called "Koiter factors" are optimized. This approach can either be based upon a linear or a non-linear pre-buckling response for determining the post-buckling of the system.

The Koiter approach is fundamentally different to the modeling, analysis, and optimization implemented by embodiments. In embodiments the residual for the equilibrium can be directly determined for the geometrical non-linear modeling. Applying the Koiter method for optimization typically requires a new and different implementation for the sensitivity calculations.

Linear Buckling Optimization

Yet another existing approach applies linear buckling modeling for the optimization. Linear buckling typically overestimates the buckling load, as the linear buckling estimates the local buckling. Therefore, optimization based upon linear buckling may not optimize the global buckling resistance of the structure.

Embodiments use geometrical non-linear modeling for large displacements whereas the linear buckling analysis uses geometrical linear modeling assuming linear displacements. Further, the linear buckling optimization has no imperfections for the structure whereas the approaches presented by embodiments disclosed herein allow different sets of imperfections for the analysis of the structure.

In summary, the existing approaches for buckling and geometrical non-linear optimization using the arc-length method and prescribed displacement method apply to large displacement modeling for the non-linear finite element analysis, which can predict the pre-buckling range and the buckling point. In contrast, the solutions presented by embodiments artificially suppress the post-buckling for external loading. There is no existing method for global buckling point optimizations that can solve problems having large displacements and geometrical non-linear modeling.

Embodiments suppress the physical post-buckling using artificial forces for large displacement modeling of nonlinear finite element analysis in order to predict the pre-buckling and post-buckling range. Embodiments provide numerous advantages for sensitivity-based optimization. For example, embodiments suppress the post-buckling range in both the modeling and optimization iterations. In addition, through embodiments, structural modeling using continuous monotonically increasing loading may be directly applied in the modeling for the optimization and itself has several advantages. Continuous monotonic increases in loading provides user-friendly and easy modeling for industrial applications. In contrast, prescribed displacement modeling is often not suitable for practical industrial applications because many industrial applications are subject to external force loading for realistic modeling.

Embodiments also decrease runtime and computational costs associated with simulation, as the post-buckling response is suppressed. Embodiments further provide for strict optimization of the pre-buckling range and increasing the buckling load. Existing optimization implementations and approaches can be reused and applied by embodiments, as existing design response (e.g., displacements) can be directly applied in both the objective function and/or constraints for sensitivity-based optimization. Additionally, existing numerical implementations and theory for sensitivity calculations (e.g., adjoint sensitivities for displacements) can directly be applied in the optimizations of embodiments.

Overview On Global Buckling And Stability Including Post-Buckling

FIGs. 1A and 1B illustrate global buckling of a physical system and FIGs. 1C and 1D illustrate global buckling of a physical system where an artificial force is added according to an embodiment.

FIG. 1A shows the global buckling of a physical system (the column 101) while a force 102 is being applied to the column 101. The applied load 102 compresses the column 101 and causes the buckling 103 of the column 101. FIG. 1B is a plot 110 of external force P 111 versus displacement 112 of the column 101 illustrated in FIG. 1A. The curve 113 in the plot 110 illustrates the pre-buckling 115 and post-buckling 116 range, as well as the buckling point 114. It should be understood that the buckling point 114 may also be referred to as the maximum load point, bifurcation point, limit point, or loading carrying capacity amongst other examples.

FIG. 1C shows the global buckling of a physical system (the column 122) while a force 121 is being applied to the column 122 so as to compress the column 122. In accordance with embodiments described herein and in contrast to the column 101, the column 122 has an added artificial internal force 123 that is configured to apply after the buckling point 133 so that the physical global buckling point 133 is still consistently captured for the physical system (i.e., beam 122). FIG. 1D is a plot 130 of external force 131 versus displacement 132 for the column 122 of FIG. 1C. The plot 130 illustrates how the added artificial force (123 in FIG. 1C and 134 in FIG. 1D) stabilizes the displacement 132 and suppress physical post-buckling of the physical system after the buckling point 133, thus allowing embodiments to reach a converged solution and determine an optimized design.

This novel approach for optimization provided by embodiments still captures the global buckling point in the modeling for the optimization, but artificially suppresses the post-buckling range for the optimization by using added artificial added forces. While existing methods present sensitivity-based optimization for linear buckling, the linear buckling in these existing methods is inaccurate for global buckling, and a full non-linear global buckling sensitivity-based optimization solution is required. Embodiments directly allow optimization for pre-buckling responses, as well as global buckling responses, by suppressing the post-buckling of a geometrical non-linear analysis. By using sensitivity based buckling optimization, embodiments have numerous advantages over geometrical non-linear optimization.

Returning to FIGs. 1A - 1D, FIG. 1A shows a typical example of a column 101 having compression loading that is causing buckling 103. Large deformation modeling and geometrical non-linear modeling are important for the realistic modeling of many applications that aim to simulate the structural response of both the pre- and post-buckling range, as well as a global buckling point, e.g., 114 [1.1 - 1.5]. Large deformation and geometrical non-linear modeling introduce bifurcation points in the modeling response. For example, these bifurcation points can be important for the realistic modeling of the pre- and post-buckling, and global buckling point, and thereby, are important to predict the stability of the system. This bifurcation between the pre-buckling range 115 and post-buckling range 116 is shown in plot 110 of FIG.

1B. Characteristically, these physical bifurcation points yield an ill-conditioned stiffness operator at the global buckling point and in the post-buckling range. This can be numerically addressed using the arc-length method and prescribed displacement loading for obtaining the physical primal solution in post-buckling range, however, as described above, these existing methods are inadequate.

Referring now to FIG. 1C, instead of modeling the post-buckling range, e.g., 116, embodiments add artificial forces 123 to suppress the response of the post-buckling range. The pre-buckling responses and global buckling response are not suppressed, so these responses (e.g., the displacement 132 in the pre-buckling range up to and including the buckling point 133) may still be applied for validation or in an optimization. Adding the artificial forces 123 to suppress the post-buckling, can also reach the final artificial loading 134 in the analysis for the optimization as embodiments suppress the post-buckling. Therefore, embodiments allow for an easy modeling and optimization setup compared to the existing methods described herein above.

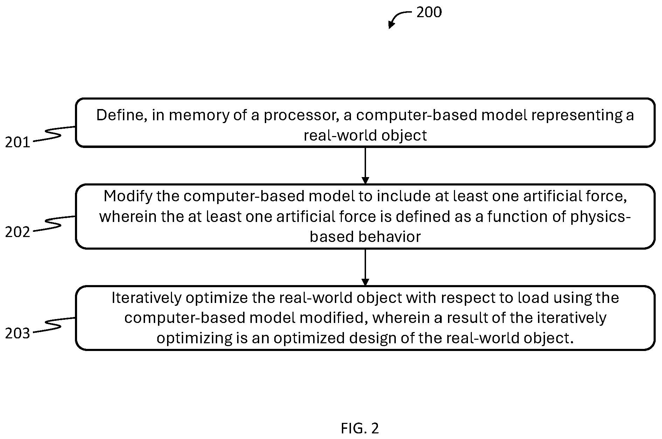

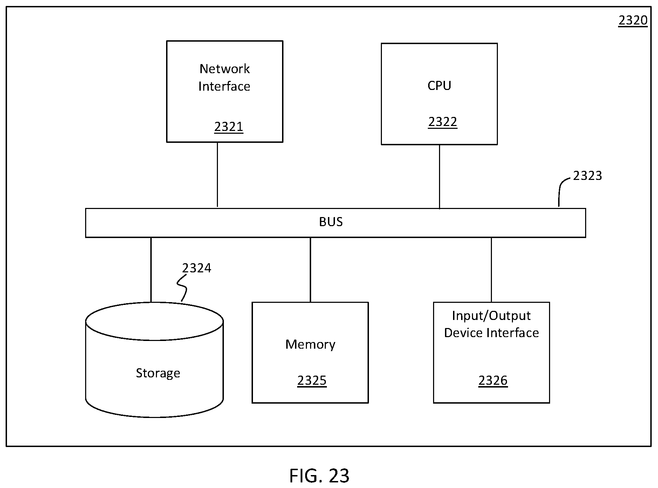

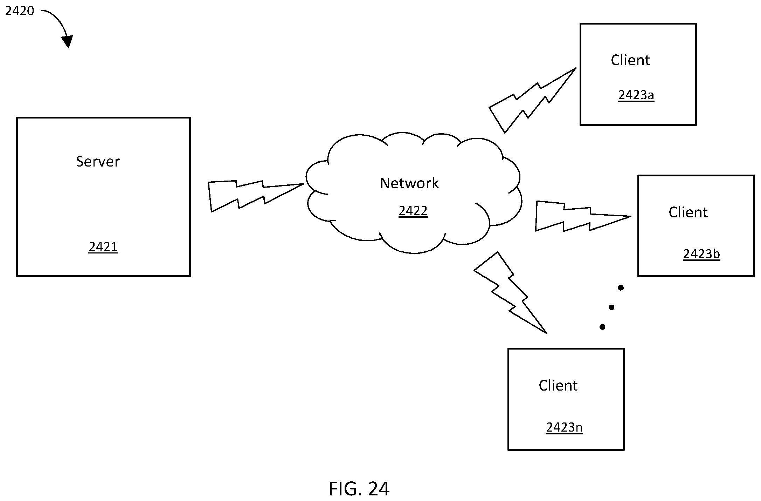

FIG. 2 is a flow diagram illustrating another embodiment 200. The method 200 is a computer-implemented method that determines an optimized design for a real-world object by suppressing post-buckling behavior using one or more added artificial forces. The method 200 is computer implemented and, as such, the functionality and effective operations, e.g., the steps 201-203, can be automatically implemented by one or more digital processors. Moreover, the method 200 can be implemented using any computing device or combination of computing devices known in the art. Amongst other examples, the method 200 can be implemented using the computer system 2320 described herein below in relation to FIG. 23 and the computer network environment 2420 described herein below in relation to FIG. 24.

The method 200 starts at step 201 by defining, in memory of a processor, a computer-based model representing a real-world object. Next, at step 202, the computer-based model (defined at step 201) is modified to include at least one artificial force. The at least one artificial force is defined as a function of physics-based behavior. In turn, at step 203, the real-world object is iteratively optimized with respect to load using the computer-based model modified to include the at least one artificial force. A result of the iterative optimization is an optimized design of the real-world object.

According to an embodiment of the method 200, the computer-based model is defined at step 201 responsive to user input. Further, in an embodiment, the computer-based model is defined at step 201 in accordance with principles known to those of skill in the art. For example, defining the model at step 201 may include discretization, i.e., creating a finite element model of the real-world object. Further, defining the model at step 201 may include assigning appropriate properties such as loads and boundary conditions to the computer-based model, e.g., FEM. Further, at step 201, the computer-based model may be configured to include geometrical non-linear modeling for capturing buckling behavior of the computer-based model representing the real-world object. In addition, the model may be configured at step 201 to include constitutive non-linear material modeling and contacts.

In an embodiment, modifying the computer-based model at step 202 to include the at least one artificial force may include adding elements in the computer-based model such that artificial forces arise from movement of load application points. Such a function (an artificial force) may require a force response. In such an embodiment, modifying the computer-based model at step 202 to include the at least one artificial force includes defining such a force response. According to an embodiment, the force response is modelled using highly non-linear connector elements where the artificial force function can be described, for example, using a non-linear stiffness for a spring as a function of displacement, a viscosity for a damping as a function of velocity, and a mass for an inertia mechanism as a function of acceleration and similar mechanism types. Further, in an embodiment, modifying the model at step 202 may include receiving, e.g., from a user, an indication of the at least one artificial force. This received indication may include properties of the at least one force, including the force amount(s) and properties of the force(s), e.g., the force amount(s) as a function of physics-based behavior.

In embodiments of the method 200, the artificial force may be defined as a function of any physics-based behavior known to those of skill in the art. For instance, in an embodiment, the physics-based behavior is at least one of: a displacement, a velocity, and an acceleration.

In an embodiment of the method 200, iteratively optimizing the real-world object at step 203 may include performing a simulation using the computer-based model modified and, based on a result of the simulation, evaluating compliance of a value of a property of the real-world object with respect to a design parameter. This evaluating may include determining if a value of a property, e.g., force before buckling, meets a requirement. Such an embodiment may include, responsive to the evaluating determining the value of the property complies with the design parameter, determining the computer-based model modified represents the optimized design of the real-world object. Further, responsive to the evaluating determining the value of the property does not comply with the design parameter, such an embodiment of the method 200 iterates: (i) updating the computer-based model modified, e.g., changing a dimension of an element of the model,, (ii) performing a simulation using the updated computer-based model modified, and (iii) based on a result of the simulation performed using the updated computer-based model modified, evaluating compliance of the value of the property of the real-world object with respect to the design parameter, until the evaluation determines the value of the property complies with the design parameter.

In another embodiment of the method 200, iteratively optimizing the real-world object at step 203 may include the processor performing a simulation using the computer-based model modified. According to an example embodiment, performing the simulation may include (i) applying the load to the computer-based model modified, (ii) determining a value of the physics-based behavior of the computer-based model caused by the load applied, and (iii) based on the value of the physics-based behavior determined, applying the at least one artificial force to the computer-based model modified. In one such example embodiment, applying the at least one artificial force comprises, responsive to the value of the physics-based behavior determined exceeding a threshold, counteracting a deformation in the computer-based model modified.

In still another embodiment of the method 200, iteratively optimizing the real-world object at step 203 may include the processor solving for a primal solution of equilibrium for the computer-based model modified and determining a design response and at least one corresponding sensitivity with respect to a design variable of the computer-based model modified. Next, such an embodiment optimizes the real-world object using the computer-based model modified, the determined design response, and the at least one corresponding sensitivity. In this embodiment a result of the optimizing may be a converged design representing the optimized design of the real-world object or a non-compliant solution (e.g., a solution where a value of a property does not meet a requirement). Responsive to the result of the optimizing being a non-compliant solution, such an embodiment modifies the at least one artificial force and iterates the solving, determining, an optimizing, using the at least one artificial force modified. In this way, such an embodiment allows the artificial force to be modified during optimization iterations.

According to an embodiment of the method 200, the at least one artificial force may be configured to counter a deformation in the computer-based model modified responsive to a value of the physics-based behavior of the real-world object exceeding a threshold value. In another embodiment, the at least one artificial force is configured to suppress a post-buckling response of the real-world object.

In yet another embodiment, the method 200 may determine a buckling point within the real-world object.

Embodiments of the method 200 may be used to analyze objects, e.g., real-world objects, as they exist in the real-world. In such an example embodiment, measurement(s), e.g., using one or more sensors or other known measuring devices, are taken of a real-world object and these measurements are used at step 201 to define the computer-based model. As such, the model defined at step 201 represents the object as the object exists in the real-world. Thus, such an embodiment may determine an optimized design of the real-world object at step 203 and improvements may be made to the object based on results of embodiments. For example, a point of failure in an object, e.g., a bridge, may be identified and, in turn, additional supports may be added to the bridge to prevent the failure. Similarly, embodiments may be used to determine optimized designs of not yet constructed real-world objects. In such an embodiment, the computer-based model is defined at step 201 and represents an initial object design. This model is then used at steps 202 and 203 and, after determining the optimized design at step 203, the real-world object may be constructed/manufactured in accordance with the determined optimized design.

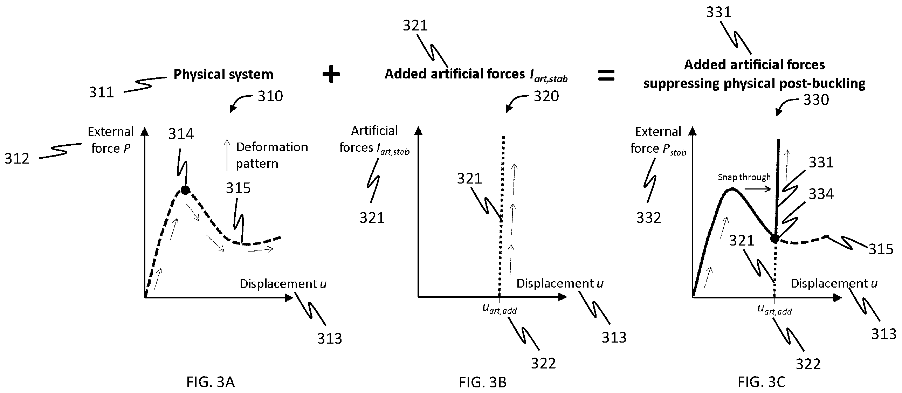

FIGs. 3A-C illustrate how an embodiment adds artificial forces to suppress a response in the post-buckling range. As shown in FIGs. 3A-C the pre-buckling responses and global buckling response are not suppressed and, therefore, these responses may still be applied in an optimization.

Specifically, FIGs. 3A-C are graphs 310, 320, and 330, respectively, which depict suppressing the physical post-buckling of a physical system 311 by adding internal artificial forces. Graph 310 of FIG. 3A depicts external force $P$ 312 applied to a physical system 311 versus displacement $u$ 313 in the physical system 311. In the plot 310, the line 315 indicates the displacement pattern in the physical system 311 responsive to the force 312. It can be observed in FIG. 3A, that as external force $P$ 312 increases, so too does displacement $u$ 313 of the physical system 311 (e.g., a beam), until the bifurcation point 314. After the bifurcation point 314, the physical system enters what is referred to as the "post-buckling response." In graph 310, there are no added artificial forces, therefore after the buckling point (bifurcation point) 314 for the physical system 311, i.e., within the post-buckling response/range, a converged design cannot be obtained.

The graph 320 in FIG. 3B illustrates the artificial forces $I_{art,stab}$ 321 versus displacement $u$ 313 according to an embodiment. Graph 320 also illustrates the displacement value $U_{art,add}$ 322 of the physical system 311 where the artificial forces $I_{art,stab}$ 321 are added to the physical system 311. According to an embodiment this displacement value $U_{art,add}$ 322 is after the buckling point 314. FIG. 3B shows that t artificial forces 321 are zero until a predetermined displacement u 313, i.e., at displacement value $U_{art,add}$ 322.

FIG. 3C is a graph 330 illustrating the external force $P_{stab}$ 332 over displacement $u$ 313 as a result of adding artificial forces 321 to the physical system 311. Artificial internal forces $I_{art,stab}$ 321 are added after the buckling point 314 at a given displacement value $U_{art,add}$ 322, so the physical global buckling point 314 (bifurcation point) is still consistently captured for the physical system 311. At a given displacement value $U_{art,add}$ 322 for the primal solution, the added artificial forces $I_{art,stab}$ 321 are significantly increased, therefore the response of the physical system 311 is suppressed during the post-buckling response. This can be seen by the point 334 of plot 330. Before the given displacement value $U_{art,add}$ 322 the is no added artificial forces $I_{art,stab}$ 321, so the response of the original physical system 311 is not modified for the pre-buckling range and the global buckling point 314. In the post-buckling range, i.e., after the point 334, the deformation of the physical system 311 is suppressed thereby preventing the physical system from deforming any further. This can be visualized by line 331 indicating that additional external force 332 no longer results in increased displacement 313.

Structural Analysis: Added Artificial Forces Suppressing Post-buckling

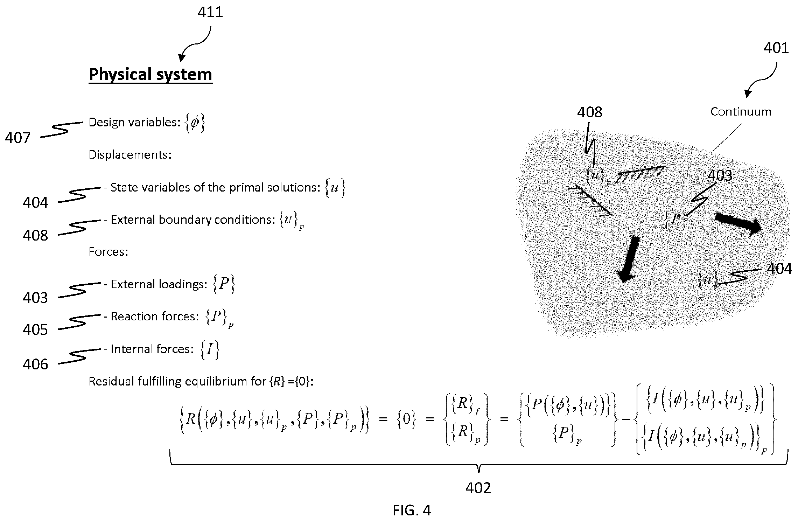

FIG. 4 shows a general continuum 401 of a physical system 411 and the corresponding equilibrium 402 applied to the external loadings {$P$} 403 where the primal solution {$u$} 404 and corresponding reaction response {$P$}$_p$ 405 determined by the residual for the equilibrium 402 being zero {$R$}={0}. For the system 411 of FIG. 4 artificial forces are not added. The internal forces {$I$} 406 are a function of design variables {$\phi$} 407, primal solution {$u$} 404, and external boundary conditions {$u$}$_p$ 408. For example, the physical system 411 can represent the column 101 described hereinabove in relation to FIGs. 1A-D.

In the general continuum 401 of the physical system 411, the primal solution {$u$} 404 may contain translational, rotational, and other degrees of freedom (DOF) types. Further, the reaction response {$P$}$_p$ 405 may contain both reaction force and reaction moments. In addition, the primal solution {$u$} 404 may represent displacements, velocities, and accelerations for static, quasi-static, and transient modeling, respectively.

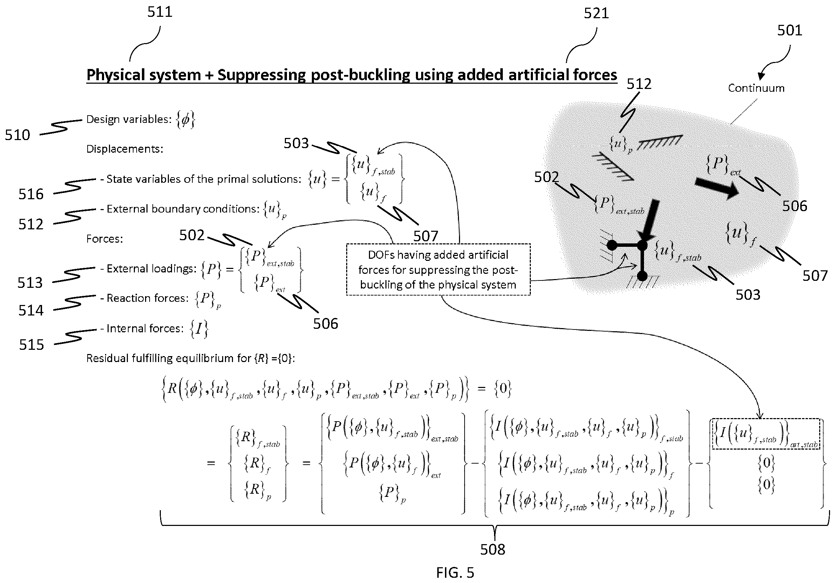

FIG. 5 shows a general continuum 501 of a physical system 511 similar to the physical system 411 of FIG. 4, but with added artificial forces {$I$}$_{art,stab}$ 521 for suppressing the post-buckling response, and the corresponding residual for the equilibrium 508. The internal forces {$I$} 515 are a function of design variables {$\phi$} 510, primal solution {$u$} 516, and external boundary conditions {$u$}$_p$ 512. For the physical system 511 having added artificial forces {$I$}$_{art,stab}$ 521 for suppressing the post-buckling response, the added artificial forces {$I$}$_{art,stab}$ 521 are a function of the primal solution {$u$}$_{f,stab}$. The external loading {$P$}$_{ext,stab}$ 502 and the primal solution {$u$}$_{f,stab}$ 503 are DOFs at which the artificial forces {$I$}$_{art,stab}$ 521 are added. Hence, the DOFs of the external loadings {$P$} 513 and primal solution {$u$} 516 are classified as {$P$}$_{ext,stab}$ 502 and {$u$}$_{f,stab}$ 503 having added artificial forces and {$P$}$_{ext}$ 506 and {$u$}$_f$ 507 having no added artificial forces. Typically, the added artificial forces {$I$}$_{art,stab}$ 521 are added to the locations or DOFs where the external loading {$P$} 513 is also present. In an embodiment, the artificial internal forces {$I$}$_{art,stab}$ 521 are added after the buckling point so the physical global buckling point is still consistently captured for the physical system 511.

In the general continuum 501 of the physical system 511, the primal solution $\{u\}$ 516 may contain translational, rotational, and other DOF types. Further, the reaction response $\{P\}_p$ 514 may contain both reaction force and reaction moments. In addition, the primal solution $\{u\}$ 516 may represent displacements, velocities, and accelerations for static, quasi-static, and transient modeling, respectively.

Structural Optimization Workflow: Added Artificial Forces Suppressing Post-buckling

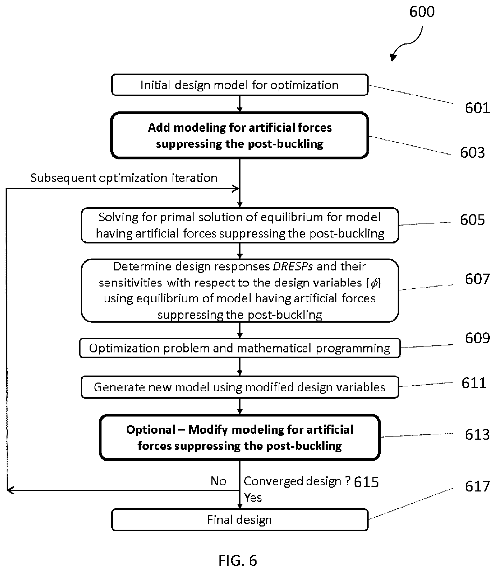

FIG. 6 is a flow diagram illustrating a computer-implemented method 600 of an iterative design process in which artificial forces are added to a computer-based model representing a real-world object. In the method 600, the artificial forces are configured to suppress a post-buckling response of an object when solving for a primal solution of equilibrium for a model representing the object.

The method 600 is an iterative design process based upon sensitivities. The process 600 accounts for the design responses (DRESPs) and corresponding sensitivities with respect to a design variable $\{\phi\}$, e.g., 407, where equilibrium, e.g., 508, has added modeling using artificial forces to suppress the post-buckling.

The iterative design process method 600 may be implemented, for example, in a predefined workflow of an existing CAE or CAD system/platform, where the existing workflow is modified to include the functionality of the method 600, e.g., step 603. The method 600 begins at step 601 by creating an initial model, e.g., representing a physical system, for the optimization. This initial model may include various loading and boundary conditions. At step 603, the model created at step 601 is modified to include internal artificial forces for suppressing physical post-buckling of the physical system. Following step 603, the model modified with the added artificial forces is employed in an iterative design process (steps 605-617).

Each design iteration begins at step 605 where the method 600 solves for a primal solution of equilibrium for the model having added artificial forces for suppressing the post-buckling. Next, at step 607, the method 600 determines design responses (DRESPs) and their sensitivities with respect to the design variables $\{\phi\}$ using the equilibrium of the model determined at step 605. According to an embodiment a DRESP defines a response for the current analysis of the model of a given optimization iteration. Thereby, a DRESP extracts one scalar value that may be a direct measure from the model (e.g., mass, center of gravity, etc.) or is determined by results of the primal solutions for the equilibriums of the model (e.g., stresses, displacements, reaction forces, etc.).

To continue, at step 609, the DRESPs are applied to define an optimization problem, solved by mathematical programming, consisting of constraints which have to be fulfilled and an objective function which is optimized. The mathematical programming is based upon values of, e.g., user defined, design targets, DRESPs, and the sensitivities of the DRESPs for updating the design variables. Thus, if the DRESPs and corresponding sensitivities cannot be determined for the post-buckling range (numerically instable) then the mathematical programming cannot update the design variables, and the optimization is prematurely terminated. Hence, adding modeling for artificial forces for suppressing the post-buckling is a factor for the numerical stability of the optimization workflow of method 600. A result of solving the mathematical programming at step 609 is values for design variables.

At step 611 of the method 600, a new model for the next optimization iteration is generated based upon the design variables determined in step 609. Sometimes the design variables and the model variables might be the same, as for example thickness design variables for sizing optimization; but might also be different, as for example density topology optimization where the design variables are relative densities that are mapped to physical densities [6.1]. Optionally, at step 613, the method 600 can also modify the modeling for the artificial forces that suppress the post-buckling. Modification to the artificial forces may be made at step 613 if, for instance, the modified variables from step 611 fundamentally change the behavior of the post-buckling response.

At step 615, the method 600 determines if the optimization has converged. If the optimization does not result in a converged design, i.e., "No" at step 615, the method 600 returns to step 605, and a new optimization iteration is started. If the optimization results in a converged design, i.e., "Yes" at step 615, the method 600 outputs the final design at step 617. For the converged design, the objective function may be optimized and modifications in design should be converged.

The method 600 has been implemented and tested [6.2] based upon the modeling approach [6.3] for structural modeling and using existing methods known in the art [6.4] for the optimization workflow. The numerical results of this implementation and numerical experiments are described in detail below.

Determining the Solution of a System Having Suppressed Post-Buckling Response Using Added Artificial Forces

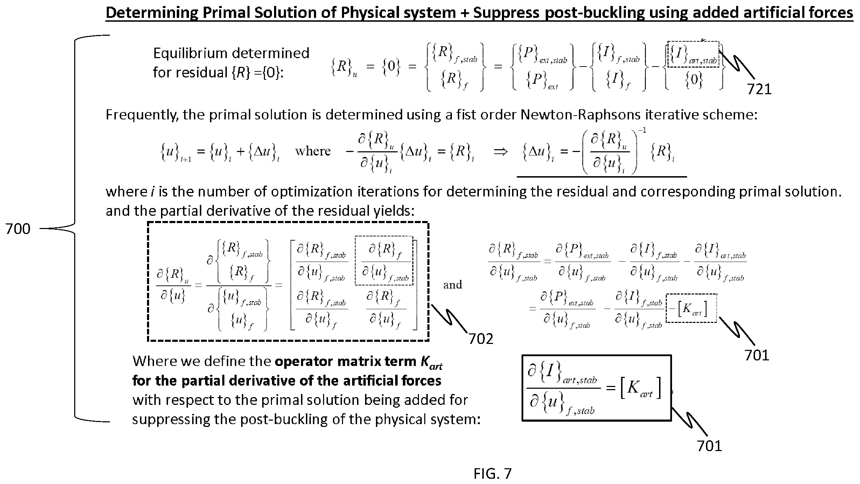

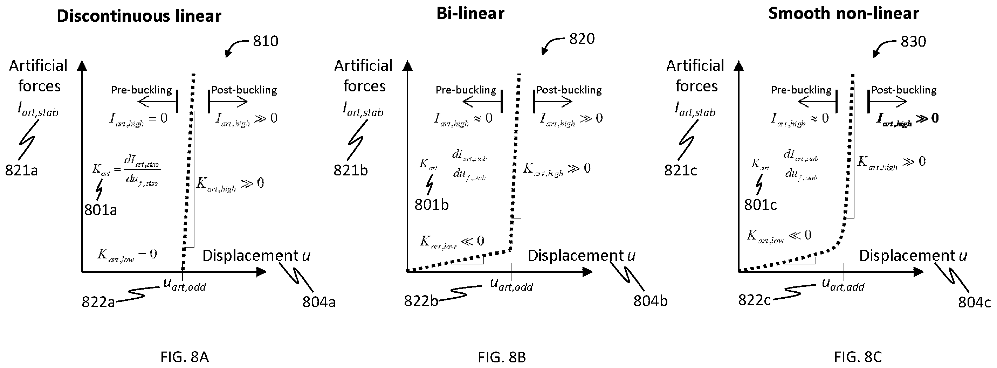

FIGs. 7 and 8A - 8C illustrate how embodiments artificially suppress post-buckling in the solution by adding artificial force(s) $I_{art,stab}$ to a residual and a corresponding operator matrix term $K_{art}$ 701 for a partial derivative of the artificial forces with respect to a primal solution.

FIG. 7 shows equations 700 for determining the solution, according to an embodiment, of a physical system with added artificial forces that suppress post-buckling. The equations 700 including the operator $K_{art}$ 701 for a partial derivative of the artificial force $I_{art,stab}$

721with respect to primal solution terms. The equations 700 show that embodiments support all types of physics modeling including large deformations as static, quasi-static, and transient modeling. Additionally, the equations 700 show that embodiments support all types and combinations of numerical solver methods applied for determining the primal finite element solution applying the partial derivatives of the residual 702 with respect to the primal solution (also called global operator).

FIGs. 8A - 8C are three plots 810, 820, and 830, respectively, illustrating examples of characteristics (Discontinuous linear plot 810, Bi-linear plot 820, and Smooth non-linear plot 830) for added artificial forces $l_{art,stab}$ 821a-c in the post-buckling range. The exemplary plots 810, 820, and 830 show example artificial forces $l_{art,stab}$ 821a-c versus displacements 804a-c, wherein at a defined displacement $u_{art,add}$ 822a-c artificial forces $l_{art,stab}$ 821a-c are implemented. The operators $K_{art}$ 801a-c are the derivatives of the artificial force curves with respect to the primal solutions for the DOF having the added artificial force, e.g., displacements yielding a stiffness operator type for $K_{art}$ 801a-c.

In FIGs. 8A - 8C, at a given value $u_{art,add}$ 822a-c for the primal solution, the added artificial forces 821a-c are significantly increased ($l_{art,stab}$>>0, $K_{art}$>>0) so the physical response for the post-buckling response is suppressed. Before $u_{art,add}$ 822a-c none, or close to none (depending on the characteristics of the artificial forces), added artificial forces 821a-c ($l_{art,stab}$ = 0, or $l_{art,stab} \approx 0$) are applied ($l_{art,stab}$<<0, $K_{art}$<<0) so the response of the original physical system is not modified for the pre-buckling range and the global buckling point.

Because embodiments apply little to no artificial forces before buckling numerical solver procedures applying the global operator are supported as implicit, explicit, and hybrid methods. For example, the following are non-limiting examples of supported solver methods: factorization of operator using direct solver or iterative solver using preconditioner, Newton-Raphson procedures including incremental-iterative techniques, incremental loading, and integration in time using first-order (e.g., Backward Euler), second-order methods (e.g. Newmark-beta), and higher-order methods (e.g., Runge-Kutta), amongst other examples.

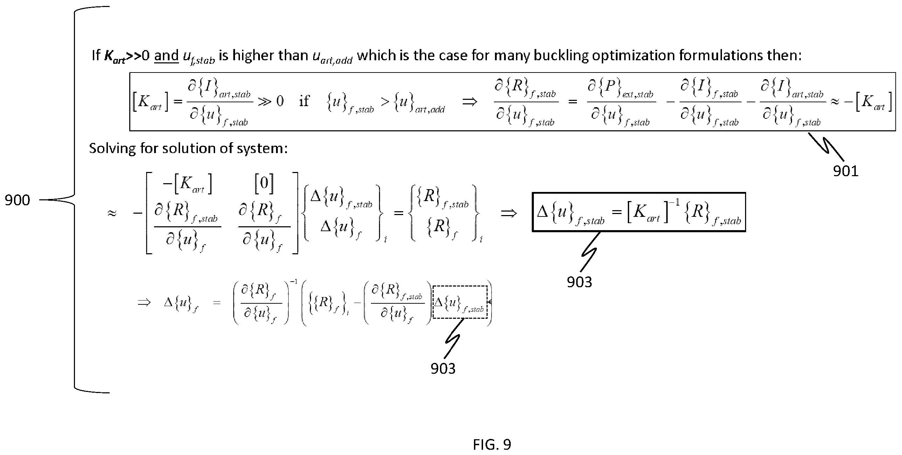

FIG. 9 shows equations 900 for determining a primal solution where the primal solution $u_{f,stab}$ 903 is higher than displacement value $u_{art,add}$ ($u_{f,stab} > u_{art,add}$), so the post-buckling of the physical system is suppressed using added artificial forces $l_{art,stab}$ and thereby, the operator 901 also includes the derivative of the supplementary forces suppressing the post-processing.

Conclusions for Solver Solution

If the added artificial force $l_{art,stab}$ and artificial operator matrix $K_{art}$, e.g., 701, are set too low then the physical post-buckling is not suppressed. Therefore, according to an embodiment, the artificial force $l_{art,stab}$ and

the artificial operator matrix $K_{art}$ are larger than some given minimum values: $l_{art,stab} > l_{art,min}$ and $K_{art,stab} > K_{art,min}$.

If the artificial operator matrix $K_{art}$ is too high for the post-buckling range, then the global operator will be ill-conditioned and cause numerical instabilities or a zero solution when solving for the artificial solution. Therefore, according to an embodiment, the artificial force $l_{art,stab}$ is selected so the artificial operator matrix $K_{art}$ is smaller than some given maximum value: $K_{art,stab} < K_{art,min}$.

An approach, in an embodiment, is to apply an operator for $K_{art}$ which yields an operator similar to, or in the span of, the operator for the pre-buckling range, depending upon the optimization application.

Determining the Sensitivities of a System Having Suppressed Post-Buckling Response Using Added Artificial Forces

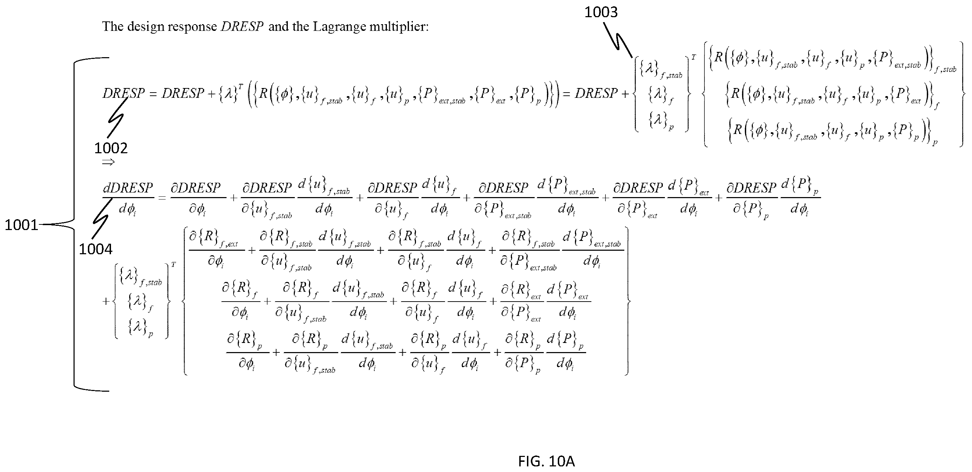

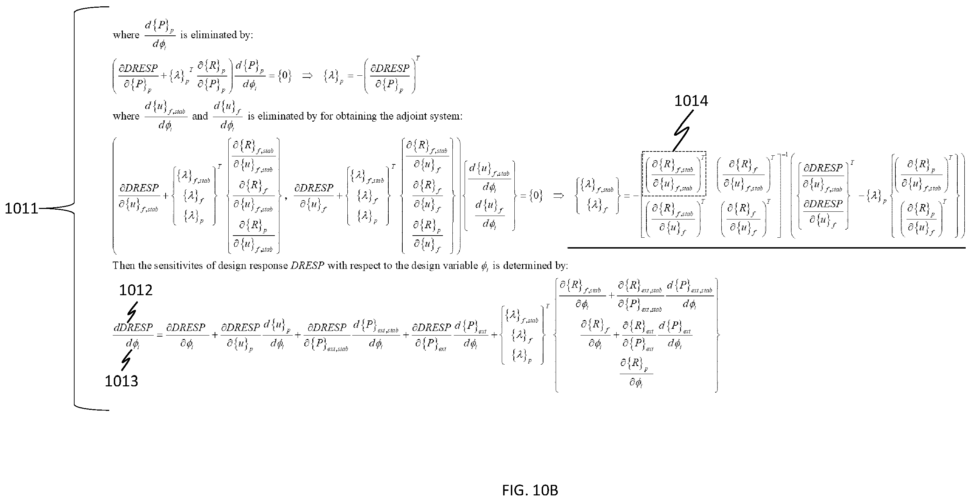

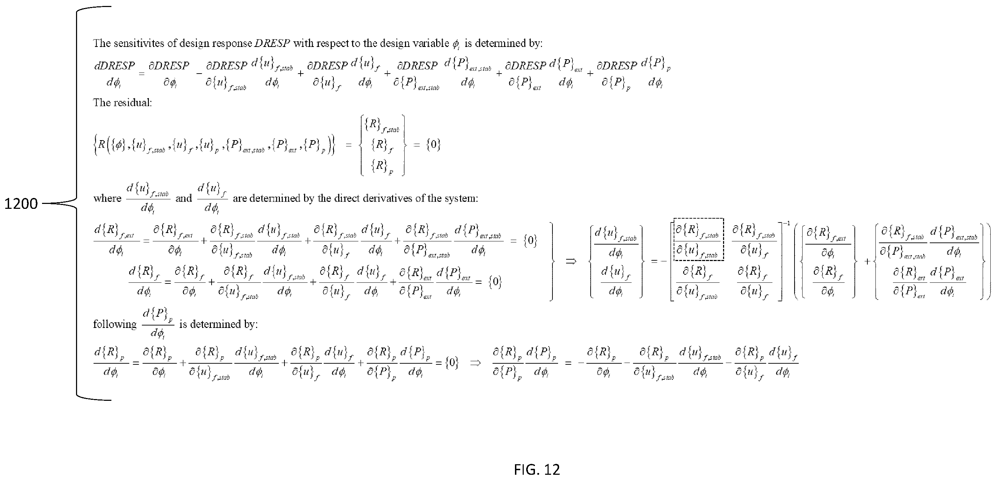

If the artificial operator matrix $K_{art}$ is too low then the physical post-buckling sensitivities are not suppressed (See FIG. 10 and FIG. 12 discussed below). Therefore, in an embodiment, the artificial operator matrix $K_{art}$ is larger than some given minimum values: $K_{art,stab} > K_{art,min}$. If the artificial operator matrix $K_{art}$ is too high for the post-buckling range, then the global operator will cause zero sensitivities in the post-buckling range. Therefore, according to an embodiment, the artificial force $l_{art,stab}$ is set so the artificial operator matrix $K_{art}$ is smaller than some given maximum value: $K_{art,stab} < K_{art,min}$.

Potential approaches for choosing the operator for $K_{art}$ for the sensitivities in the post-buckling range (See FIGs. 10 - 13) may be divided into three groups. For the first group, if the artificial post-buckling sensitivities should be numerically eliminated in the optimization, then the artificial operator $K_{art}$ is set to be considerably higher than the physical operator for the pre-buckling range. For the second group, if the artificial post-buckling sensitivities should be partially considered in the optimization range, then the artificial operator $K_{art}$ is set in the range of the physical operator for the pre-buckling range. For the third group, if the artificial post-buckling sensitivities should be highly considered in the optimization range, then the artificial operator $K_{art}$ is set lower than the physical operator for the pre-buckling range.

Adjoint Sensitivities

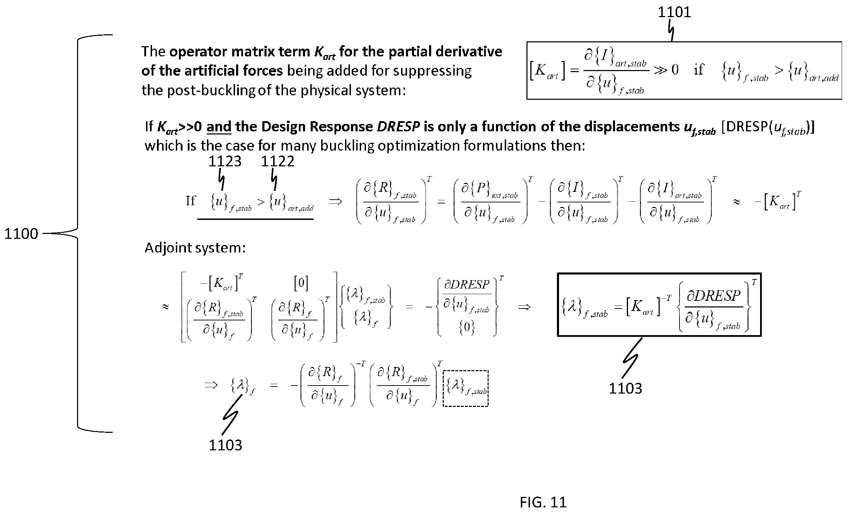

Calculation of adjoint sensitivities for objective terms and/or constraints is often a part of sensitivity-based optimization problems having many design variables. According to an embodiment, the adjoint sensitivities for a system having a suppressed post-buckling response using added artificial forces are derived as shown in FIG. 10 discussed below. The impact on the Lagrange multipliers for the adjoint sensitivities for the post-buckling range when having high artificial forces to suppress the post-buckling is shown in FIG. 11, discussed below.

FIG. 10A shows equations 1001 for an adjoint method for sensitivities of design response (DRESP) 1002 and the Lagrange multiplier $\{\lambda\}^T$ 1003 (where $\{\lambda\}^T$ consists of $\{\lambda\}_{f,stab}$ (i.e., the Lagrange multiplier for the DOF in a model having added artificial forces), $\{\lambda\}_f$ (i.e., the Lagrange multiplier for the DOF having no artificial forces) and $\{\lambda\}_p$ (i.e., the Lagrange multiplier for the DOF having external boundary conditions similar to 408 and 512), where the derivative 1004 contains a supplementary term suppressing the post-buckling of a physical system using added artificial forces.

FIG. 10B shows equations 1011 for an adjoint method for sensitivities of the design response 1012 with respect to the design variable $\phi$ 1013. The operator matrix term 1014 (the derivative of the residual $\{R\}_{f,stab}$ of the DOFs for $\{u\}_{f,stab}$ with respect to the primal solution for $\{u\}_{f,stab}$) includes the derivative of the artificial forces added to the physical system suppressing the post-buckling of the physical system.

FIG. 11 shows equations 1100 for the Lagrange multiplier $\{\lambda\}^T$, $\{\lambda\}^T$ being the transpose of $\{\lambda\}$, 1103 for the adjoint system from FIG. 10 where the primal solution $u_{f,stab}$ 1123 is higher than $u_{art,add}$ 1122 ($u_{f,stab} > u_{art,add}$) so the post-buckling of the physical system is suppressed using added artificial forces and thereby, the operator 1101 also includes the derivative of the supplementary forces suppressing the post-processing. $\{\lambda\}^T$ consists of $\{\lambda\}_{f,stab}$ (i.e., the Lagrange multiplier for the DOF in a model having added artificial forces), $\{\lambda\}_f$ (i.e., the Lagrange multiplier for the DOF having no artificial forces) and $\{\lambda\}_p$ (i.e., the Lagrange multiplier for the DOF having external boundary conditions similar to 408 and 512).

Direct Sensitivities

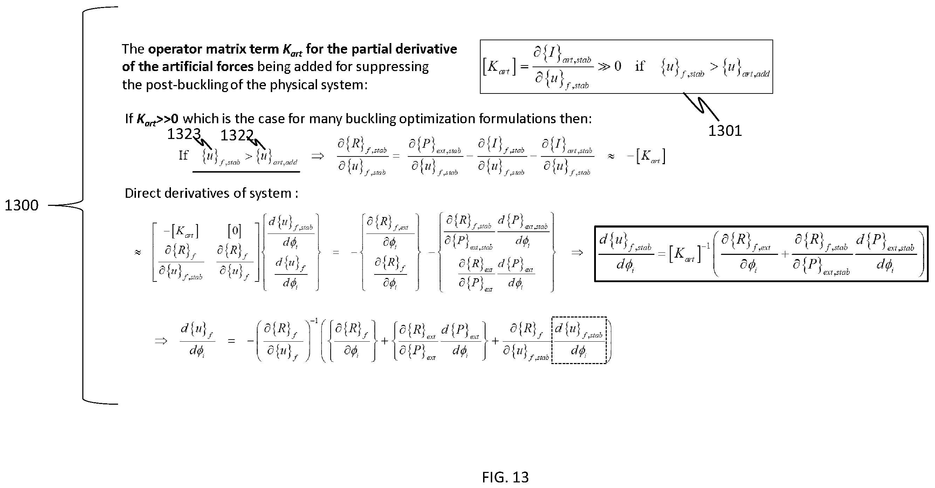

Calculation of direct sensitivities for design variables is often part of sensitivity-based optimization problems having many objective terms and/or constraints. In an embodiment, the direct sensitivities for a system having a suppressed post-buckling response using added artificial forces are derived as shown in FIG. 12 discussed below. The impact on the direct derivatives, i.e., sensitivities, for the direct system for the post-buckling range when high artificial forces are used for suppressing the post-buckling is shown in FIG. 13 discussed below.

FIG. 12 shows equations 1200 for the direct method, according to an embodiment, for calculating sensitivities of DRESP, including the derivative of a supplementary term suppressing the post-buckling of a physical system using added artificial forces. The operator matrix term (i.e., the derivative of the residual $\{R\}_{f,stab}$ of the DOFs for $\{u\}_{f,stab}$ with respect to the primal solution for $\{u\}_{f,stab}$) includes the derivative of the artificial forces added to the physical system suppressing the post-buckling of the physical system.

FIG. 13 shows equations 1300 for direct derivatives of a system from FIG. 12 where the primal solution $u_{f,stab}$ 1323 is higher than $u_{art,add}$ 1322 ($u_{f,stab} > u_{art,add}$) so the post-buckling of the physical system is suppressed using added artificial forces and thereby, the operator 1301 also includes the derivative of the supplementary forces suppressing the post-processing.

Optimization Applications for a System Having Suppressed Post-Buckling Response Using Added Artificial forces

Embodiments may be implemented using existing geometrical non-linear topology optimization methods [2.1- 2.3], [2.7], [3.1], [3.2], [6.1], [6.4] where the existing methods are altered so as to suppress post-buckling responses using added artificial forces.

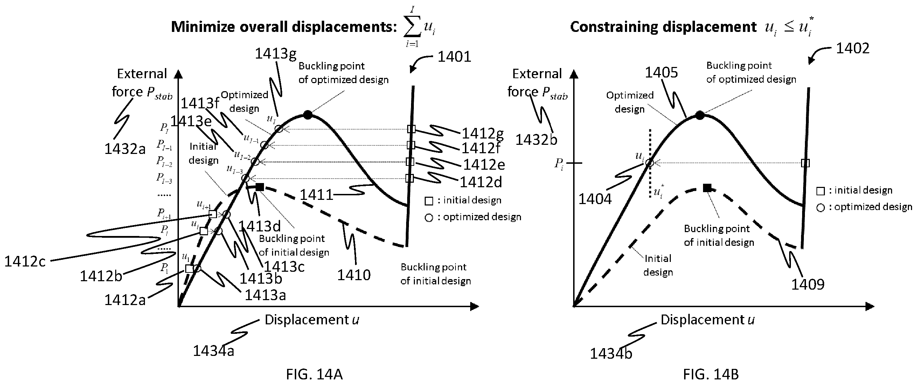

FIGs. 14A and 14B show graphs 1401 and 1402, respectively, illustrating two different optimization setups with respect to an external force $P_{stab}$ 1432a-b and displacement $u$ 1434a-b.

Graph 1401 illustrates an optimization for minimizing overall displacements, and graph 1402 illustrates an optimization for constraining displacement, both graphs 1401 and 1402 illustrate buckling optimization where internal artificial forces are added to suppress the physical post-buckling of the physical system. Graph 1401 shows the displacements 1412a-g of the initial design 1410, as well as displacements 1413a-g of the optimized design 1411 that have been minimized as applied in the objective function.

Graph 1402 shows a displacement 1434b of the geometric non-linear optimized design 1405 subject to a displacement 1404 constraint, compared to the geometric non-linear initial design 1409.

Referencing FIG. 14A, plot 1401 compares the overall displacements for the initial design 1410 and the optimized design 1411. For the first topology optimization shown in graph 1401, the displacements 1413a-g of the optimized design 1411, where post-buckling response is suppressed using added artificial forces, are applied in the objective function. Hence, the sum of the displacements is minimized as the objective function is subject to a mass constraint. The optimized optimization formulation of 1401 will implicitly maximize the global buckling load carrying capacity for a given external loading 1432a.

Referencing FIG. 14B, plot 1402 compares the overall displacements for the initial design 1409 and the optimized design 1405. For the second topology optimization shown in graph 1402, the displacement 1434b of a system with a suppressed post-buckling response using added artificial forces is constrained to be below a given value. Hence, the mass is minimized as the objective function is subject to a displacement constraint. The optimized optimization formulation of plot 1402 will implicitly constrain the global buckling load carrying capacity for given external loading. It should be noted that both the objective function optimization formulation of graph 1401 and constraint optimization formulation of graph 1402 have high external loading in the post-buckling range. The last load increments of this high external loading have only a numerical solution and corresponding sensitivities for the optimization setup due to the added artificial forces.

Model Setup Suppressing Post-Buckling Response Using Added Artificial Forces

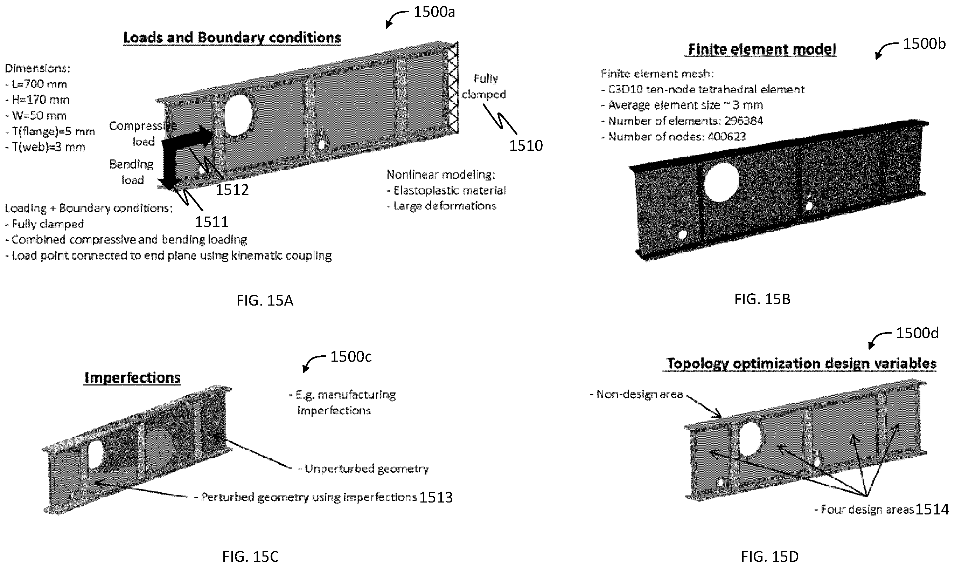

FIGs. 15A - 15D show example models 1500a-d for topology optimization for a physical beam system with a length dimension of 700 millimeters (mm), a height dimension of 170 mm, a width dimension of 5mm a T(flange) dimension of 5 mm, and a T(web) dimension of 3 mm.

FIG. 15A shows loads 1511 and 1512 and boundary conditions 1510 applied to the model 1500a. The boundary condition 1510 requires that the beam 1510a is fully clamped at the right side and while the beam 1510a is subject to both bending load 1511 and compressive load1512 at the left side for buckling. In this model 1500a, the load point is connected to the end plane using kinematic coupling.

FIG. 15B illustrates a finite element model 1500b generated based on the model 1500a of FIG. 15A. The finite element model 1500a includes 296384 C3D10 ten-node tetrahedral elements [6.2]. Further, both the elastic and elastoplastic material properties are also defined for the geometrical non-linear model 1500b.

FIG. 15C shows model 1500c where geometric imperfections 1513 are introduced to the initial model 1500a shown in FIG. 15A and the finite element model 1500b shown in FIG. 15B. The model 1500c introduces geometrical imperfections 1513 into the finite element model 1502 model for a buckling analysis. The introduction of imperfections 1500c allows an embodiment to analyze a realistic real-world beam because imperfections are often found in real-world objects, to manufacturing uncertainties and imperfections.

The physical bifurcation points for geometrical non-linear modeling yield an ill-conditioned stiffness operator before the post-buckling range but they can be numerically stabilized using quasi-static modeling. [6.2, 6.3] for obtaining the physical primal solution in the pre-buckling range and around the buckling point. Hence, quasi-static modeling is applied for the models 1500a-d.

Embodiments, e.g., the optimization workflow 600, may be applied for the density-based topology optimization using the so-called Solid Isotropic Material with Penalization method (SIMP) approach for the material interpolation, and using design variable filtering to regularize the density-based topology optimization problem so as to ensure mesh independency as well as prevent checker boarding [6.1, 6.4]. FIG. 15D shows in the model 1500d that the design variables are defined as the four design areas 1514, where each finite element is a design variable in the topology optimization for determining the new optimized conceptual material layout for the beam model 1500d.

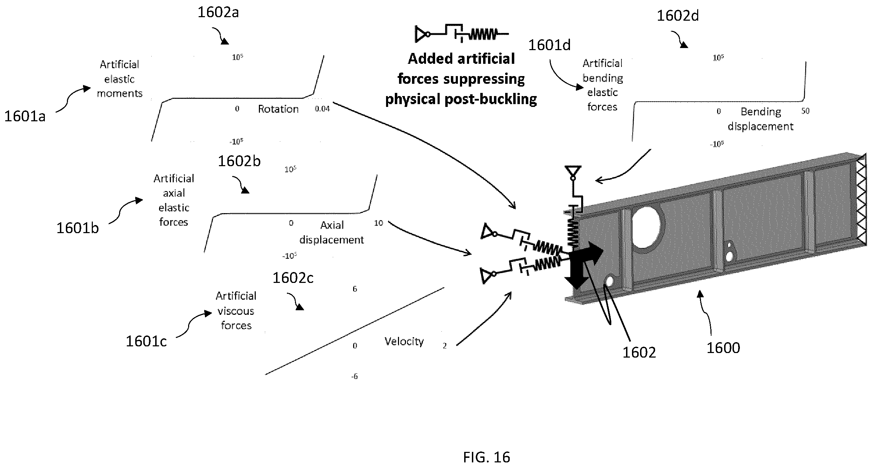

FIG. 16 shows a model 1600 based on the original physical beam system of FIGs. 15A - 15D but where artificial forces 1601a-d are added to suppressing the post-buckling response. The added artificial forces 1601a-d are strictly a function of the primal solution response. These added artificial forces include artificial elastic movements 1601a to suppress rotation, artificial axial elastic forces 1601b to suppress axial displacement, artificial viscous forces 1601c to suppress velocity, and artificial bending elastic forces 1601d to suppress bending displacement. The forces 1601a-d are defined in accordance with the plots 1602a-d, respectively. The artificial elastic forces 1601b (axial) and 1601d (bending), elastic moments 1601a, and viscous forces 1601c, are added at the location of the external loading 1602. These artificial forces 1601a-d are a function of rotation, axial displacement, velocity, and bending displacement, respectively, as shown in the plots 1602a-d, respectively. It should be noted that before and at the buckling point the velocities are numerically zero. Therefore, a linear function is sufficient for the viscous forces as function of the velocities.

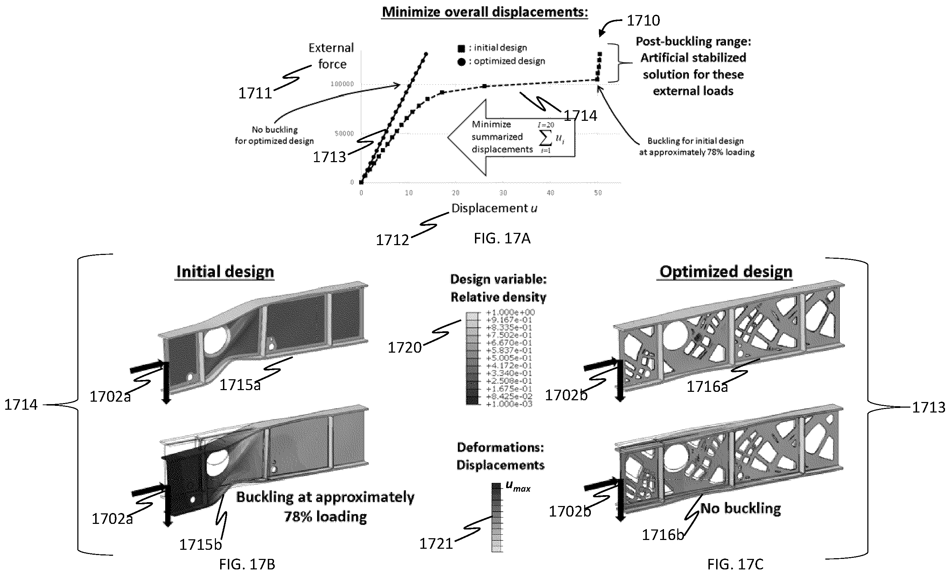

The model 1600 is used to obtain the results described hereinbelow in relation to FIGs. 17A-C, 18A-C, 19A-B, 20A-C, 21A-B, and 22A-B.

Objective Optimization for a Response Having Suppressed Post-Buckling Response Using Added Artificial Forces

FIG. 17A shows plot 1710 illustrating the structural response to force 1711 versus displacement 1712 for both an initial design 1714 (See FIG. 17B) (50% material) and a topology optimized design 1713 (see FIG. 17C) where the sum of the displacements is the objective function, and the objective function is minimized for 20 external load increments using added artificial forces to suppress the post-buckling responses. The relative mass is constrained to be less than or equal to 50%. The initial design 1714 buckles at around 78% of the external loading, but the displacement 1712 solutions are artificially stabilized in the post-buckling range using added artificial forces to suppress the post-buckling responses. Thereby, a displacement 1712 solution exists for the optimization for all loading 1711 increments independent upon loading 1711 level and displacement 1712 response in the post-buckling range. The optimized design 1713 has no global buckling at full loading.

As indicated above, FIG. 17B shows an initial design 1714 where the beam 1715a is a model of the initial design where no load has been applied, and the beam 1715b is the model that has buckled during optimization subject to loading at the point 1702a. In the beam 1715a shading in accordance with the key 1720 shows design variable relative density in each element and in the beam 1715b shading in accordance with the key 1721 shows deformation displacement. This relative density can be scaled up and down between approximately 0 and 1 during the optimization. The optimization process, in an embodiment, uses SIMP penalization to obtain a 0-1 density distribution, therefore a final optimization design mainly consists of either void (i.e., close to 0) or stiff (i.e., 1) material, however there may still be few intermediate density elements in the final optimized design. In FIG. 17A, line 1714 shows the displacement from the beam 1715a resulting in the beam 1715b.

FIG. 17C shows an optimized design 1713 where the beam 1716a is a beam model where no load has been applied and the beam 1716b is the model subject to loading at the point 1702b. In the beam 1716a shading in accordance with the key 1720 shows design variable relative density in each element and in the beam 1716b shading in accordance with the key 1721 shows deformation displacement. FIG. 17C shows the optimized beam geometry resulting from the geometrical non-linear topology optimization for the minimization of the sum of the displacement magnitudes at the loading point 1702b as per the objective function defined in FIG. 14A subject to a relative mass constraint of 50% for the design domain.

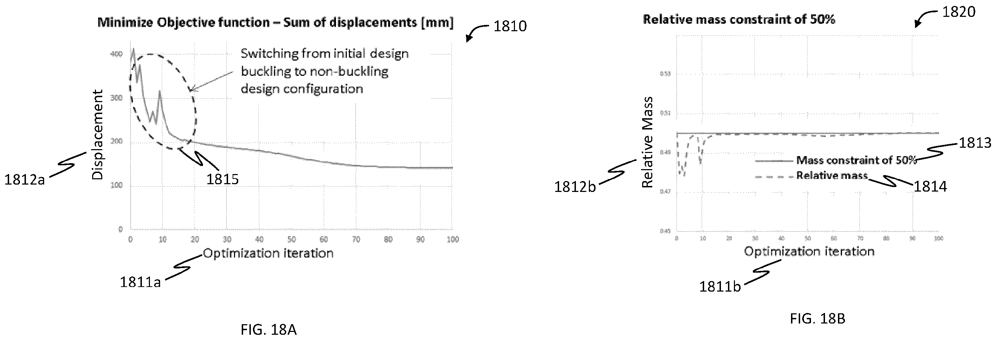

FIG. 18A shows plot 1810 illustrating optimization convergence of the objective function to minimize overall displacements ( $\sum_{i=1}^{l} u_i$ ) defined in FIG. 14A. Plot 1800 illustrates displacement 1812a versus optimization iteration history 1811a for an optimization of the objective function of minimizing sum of displacements where the optimization is performed by suppressing post-buckling responses by using added artificial forces. According to an embodiment, the objective function value is a scalar sum of a finite number of design responses representing load point deflection at different time points during a non-linear loading sequence. It can be observed from plot 1810 that the switch from an initially buckling configuration to a non-buckling configuration is indicated by a rather sharp drop 1815 in the objective function value.

FIG. 18B shows plot 1820 illustrating results from an optimization performed subject to a defined volume constraint (e.g., the optimized design shall have a relative material volume, or relative mass, less than or equal to 50%). Plot 1820 shows relative mass 1812b versus optimization iteration history 1811b for an optimization performed subject to a relative mass constraint of 50%, where the optimization utilizes artificial forces as described herein. In the plot 1820 series 1813 shows displacement versus optimization history when employing a mass constraint of 50% and series 1814 shows displacement versus optimization history for relative mass.

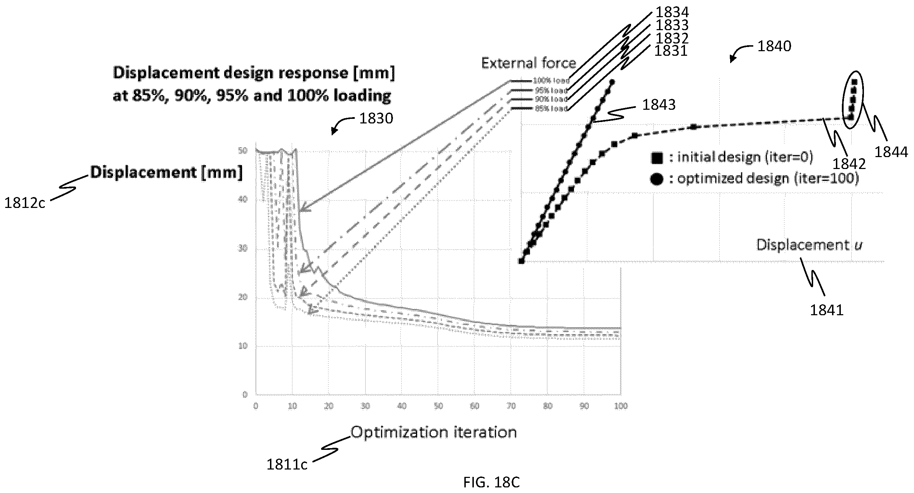

FIG. 18C is a plot 1830 of displacement 1812c design responses versus optimization history for optimizations performed with 100% load (1834), 95% load 1833, 90% load 1832, and 85% load 1831. The plot 1830 shows switching from the initial design buckling to the no buckling design configuration at full load 1834, as can be observed by the rapid decrease in displacement 1812c between optimization iteration 1811c 10 and 20. Plot 1840 shows the loading point displacement 1841 response in initial design 1842 and the optimized 1843 design. Plot 1840 highlights that the initial design 1842 will buckle, and artificial forces will support the loading point as indicated by the sharp incline 1844. However, it can also be observed that in this example the optimized design 1843 has sufficient stiffness to carry the applied loads without buckling, and thus no artificial forces were required.

The responses in plot 1810 (FIG. 18A) and plot 1830 (FIG. 18C) show the global buckling of the initial design switching to the optimized design having no buckling for full loading. Additionally, a regular optimization convergence is shown in FIGs. 18A - 18C demonstrating that existing optimization implementations (objective function) and approaches can be reused and applied for optimizing the responses in the pre-buckling range and for indirectly optimizing the global buckling load carrying capacity. This regular optimization convergence is illustrated by the consistent and stable optimization iteration history convergence, roughly past iteration 20 for plots 1810, 1820, and 1830, where the objective function of the sum of displacements is minimized, and the relative mass constraint is fulfilled for all optimization iterations. Additionally, it can be observed in plot 1830 that the displacement terms for the last load increments (FIG. 18C the largest displacements 1812c) in the objective function are initially in the post-buckling range, and during optimization iterations are transferred to the pre-buckling range.

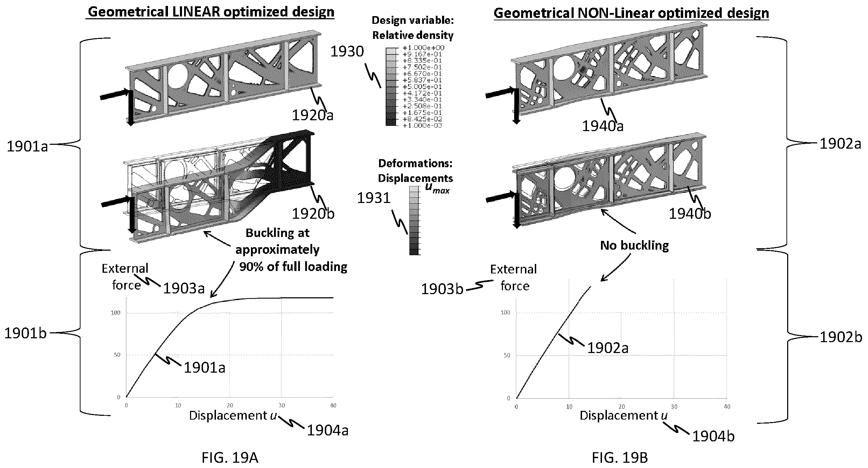

As discussed below with reference to FIGs. 19A and 19B, validations are used to confirm that optimized designs will work as intended. In FIGs. 19A and 19B, validations were performed on both the geometrical linear optimized design 1901a, and geometric non-linear optimized design 1902a. Validations for designs 1901a and 1902a were performed using a full set of non-linear effects (e.g., large deformation modeling enabling both buckling and elastic-plastic material constitutive modeling). The validation models of FIGs. 19A and 19B do not contain any stabilization in order to find the true load bearing capacity, and also to determine the post-buckling range. It can be observed from FIG. 19A below that the geometric linear optimized design 1901a will buckle at approximately 90% of the design load and, thus, can be considered a design failure. However, it can be observed that the geometric non-linear optimized design 1902a validation will successfully carry the entire design load without structural instability or failure up to the full design load, thereby indicating a fully validated optimized design.

FIGs. 19A and 19B show geometrical non-linear validations, without stabilization and without added artificial forces, for suppressing the post-buckling responses of both the geometrical linear optimized design 1901a and the geometrical non-linear optimized design 1902a. In FIG. 19A the beam 1920a is a beam model where no load has been applied and the beam 1920b is the model subject to loading where the beam has buckled. In FIG. 19B the beam 1940a is a beam model where no load has been applied and the beam 1940b is the model subject to loading where the beam has not buckled. In the beams 1920a and 1940a shading in accordance with the key 1930 shows design variable relative density in each element and in the beams 1920b and 1940b shading in accordance with the key 1931 shows deformation displacement. Both designs 1901a and 1902a were achieved using minimizing displacements as the objective function, subject to a relative mass constraint of 50%. Both designs 1901a and 1902a have been validated using geometrical non-linear modeling without stabilization and no added artificial forces for suppressing the post-buckling responses. Plot 1901b compares external force 1903a to displacement 1904a, illustrating that the geometrical linear optimized design 1901a buckles at approximately 90% of the full loading. Plot 1902b compares external force 1903b to displacement 1904b illustrating that the geometrical non-linear optimized design 1902a does not buckle for the full loading.

Constraint Optimization for a Response Having Suppressed Post-Buckling Response Using Added Artificial Forces

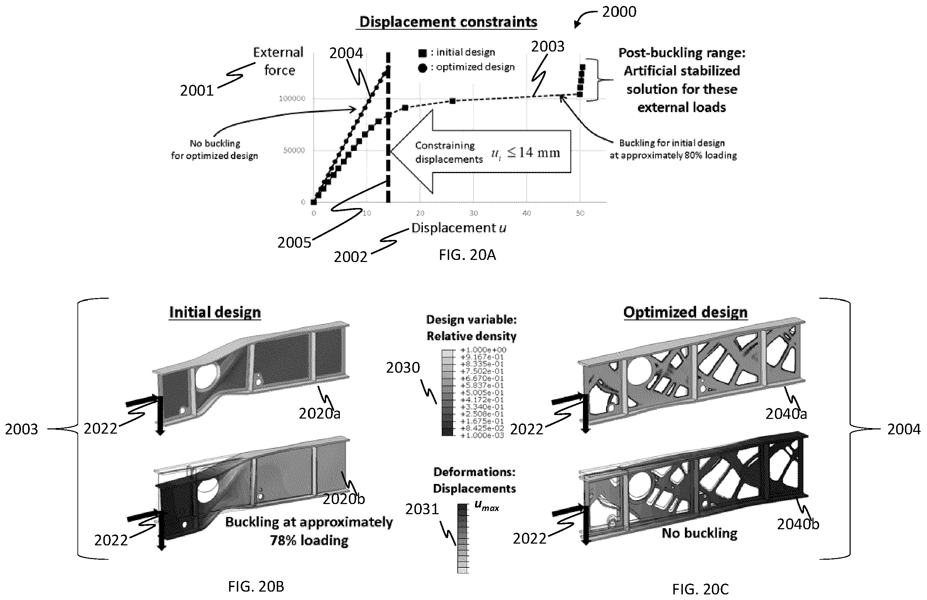

FIG. 20A is a plot 2000 illustrating the structural response using the curves 2003 and 2004 of force 2001 versus displacement 2002. The curve 2003 shows the response for an initial beam design (50% material) 2003. The curve 2004 shows the response for a topology optimized design 2004 where the objective function minimizes mass and the displacements 2002 are constrained 2005 to be less or equal to 14 mm for 20 loading increments using added artificial forces for suppressing the post-buckling responses. In FIG. 20A the beam 2020a is a beam model where no load has been applied and the beam 2020b is the model subject to loading where the beam has buckled. In FIG. 20B the beam 2040a is a beam model where no load has been applied and the beam 2040b is the model subject to loading where the beam has not buckled. In the beams 2020a and 2040a shading in accordance with the key 2030 shows design variable relative density corresponding to each element and in the beams 2020b and 2040b shading in accordance with the key 2031 shows deformation displacement.

The initial design 2003 buckles at around 78% of the external loading, but the displacement solutions are artificially stabilized in the post-buckling range using added artificial forces for suppressing the post-buckling responses. Thereby, a displacement solution exists for the optimization for all loading increments independent of loading level and displacement response in the post-buckling range. The optimized design 2004 has no global buckling at full loading. The geometrical non-linear topology optimization result 2004 is shown in FIG. 20C where the objective function is to minimize the mass of the object subject to 20 displacement constraints, where each constraint is defined in load increments of 5% relative to the full load being 100%. This enforces the displacement 2002 at the loading point 2022 to be less than or equal to 14 mm for 20 loading increments, as defined in FIG. 14B, by using added artificial forces for suppressing the post-buckling responses.

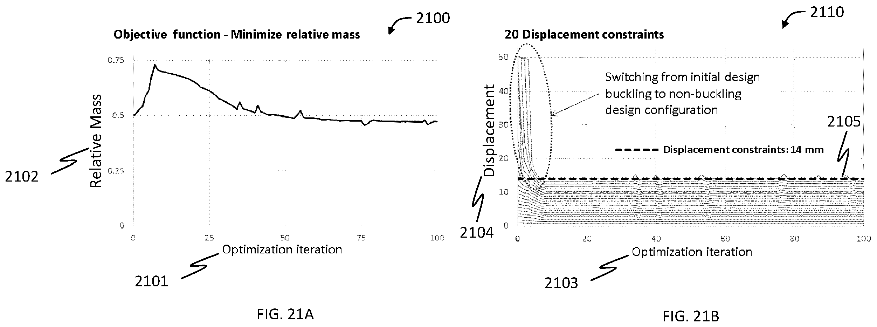

FIGs. 21A and 21B show plots 2100 and 2110, respectively, each illustrating the optimization iterations to achieve a design constraint. In plot 2100, the objective function is to minimize relative mass. Plot 2110 illustrates 20 individual displacement constraints where the objective function is to minimize displacement. FIG. 21A shows plot 2100 illustrating the relative mass 2102 versus optimization iteration 2101 for an objective function configured to minimize relative mass. FIG. 21B shows plot 2110, comparing displacement 2104 versus optimization iterations 2103. The plot 2110 illustrates displacement constraints 2105 for the loading increments having suppressed post-buckling responses using added artificial forces. The optimization iteration history 2103 of the displacement constraints 2105 shows that the full loading for the initial buckling design switches to a no buckling design configuration at full load in less than 10 optimization iterations, as can be seen by the displacements 2104 remaining at or below the displacement constraints 2015 past iteration 10. The displacement 2104 responses in FIG. 21B show that the global buckling of the initial design switching to the optimized design has no buckling for full loading. Additionally, a regular optimization convergence is shown in FIGs. 21A and 21B, demonstrating that an existing optimization implementation (constraints) and approaches can be reused and applied for optimizing the responses in the pre-buckling range and for indirectly optimizing the global buckling load carrying capacity.

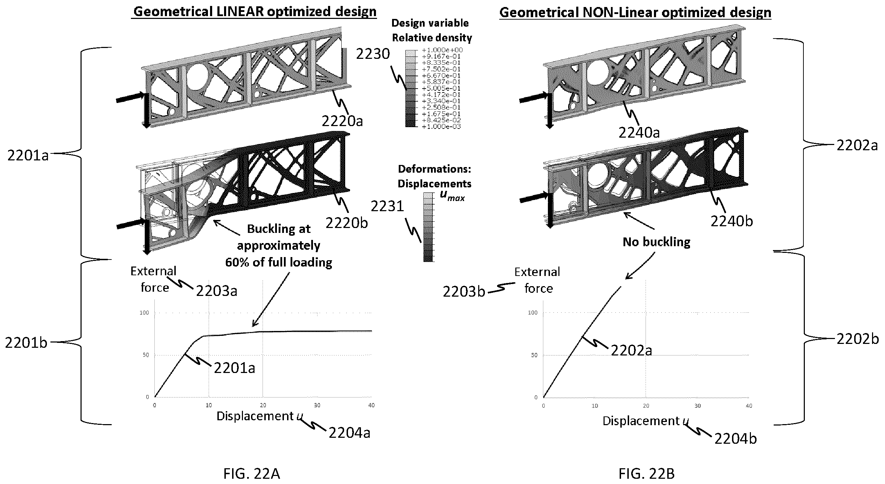

FIGs. 22A and 22B show geometrical non-linear validations, without stabilization and without added artificial forces, for suppressing the post-buckling responses of both the geometrical linear optimized design 2201a and the geometrical non-linear optimized design 2202a. In FIG. 22A the beam 2220a is a beam model where no load has been applied and the beam 2220b is the model subject to loading where the beam has buckled. In FIG. 22B, the beam 2240a is a beam model where no load has been applied and the beam 2240b is the model subject to loading where the beam has not buckled. In the beams 2220a and 2240a shading in accordance with the key 2230 shows design variable relative density corresponding to each element and in the beams 2220b and 2240b shading in accordance with the key 2231 shows deformation displacement. Both designs 2201a and 2201b were achieved using minimizing mass as the objective function, subject to 20 displacement constraints of 14 mm. Both designs 2201a and 2202a have been validated using geometrical non-linear modeling without stabilization and no added artificial forces for suppressing the post-buckling responses. Plot 2201b compares external force 2203a to displacement 2204a, illustrating that the geometrical linear optimized design 2201a buckles at approximately 60% of the full loading. Plot 2202b compares external force 2203b to displacement 2204b illustrating that the geometrical non-linear optimized design 2202a does not buckle for the full loading.

Technical Observations

Embodiments present a novel approach to sensitivity-based optimization that allows for the optimization of the global buckling for external loading. This ensures stable convergence and accurate solving of the primal solution in the pre-buckling range and for the global buckling, but artificially suppresses the post-buckling. Embodiments also allow for the reuse of existing software and solutions for both modeling and optimization. Embodiments achieve convergence in the solution for the models of, e.g., all, optimization iterations and promote fast numerical convergence in the post-buckling range and thereby, lower computational costs.

Embodiments support the suppressing of the post-buckling by using added artificial forces. Embodiments can be implemented for any types of constitutive models and any types of shape functions applied in large deformation finite element modeling. Thereby, embodiments are applicable to all finite element types, all physics modeling including large deformations, e.g., as static, quasi-static and transient modeling, and all types and combinations of numerical solver methods applied for determining the primal finite element solution. Embodiments can address any sensitivity based structural optimization disciplines such as, for example, topology optimization, shape optimization, sizing optimization, and bead optimization, amongst other examples.

Example Advantages

Embodiments suppress the physical post-buckling response of a computer-based model representing a real-world object by using added artificial forces for large displacement modeling using non-linear finite element analysis in order to predict the pre-buckling range and post-buckling range. Embodiments have several important applications, amongst other examples. For instance, embodiments may be beneficial for rigorous numerical calculations of the numerical solution for a geometrical non-linear finite element model. This aids in obtaining a physical primal solution for the pre-buckling range and global buckling point, as well as obtaining an artificial solution for the post-buckling range and requires less solver iterations for the solution in post-buckling range and thereby, requires less computational costs.

For another example, embodiments are beneficial for geometrical non-linear optimization. Specifically, embodiments suppress the post-buckling range in the modeling for the optimization. Additionally, structural modeling, using continuous and monotonic increases in loading, can be applied directly in the modeling for the optimization, providing several advantages. For example, embodiments present user-friendly easy modeling, a solution (and thereby, the DRESP and corresponding sensitivities) can be determined for a given external load, and obtaining a design as the solution does not fail when solving for the numerical solution in the post-buckling range (thereby, achieving convergence in the solution for all optimization iterations).

Further, prescribed displacement modeling is frequently not of interest for practical industrial applications as many industrial applications are subject to external force loading for realistic modeling. Prescribed displacement driven modeling often does not capture the correct physical modeling of a system. Many industrial applications may choose to utilize a force driven modeling approach for optimization setups, these may not easily be solved when the tangential stiffness approaches 0, indicating a stability limit. Force driven modeling oftentimes cannot be converted into an equivalent prescribed displacement driven modeling. Therefore, force driven modeling has to be applied to obtain realistic modeling and therefore realistic results. As such, previous works have provided workarounds to this issue.

However, embodiments make it possible to pass the instability limit and, then, in the post-buckling range "catch" the loading point through the artificial forces. From an optimization iteration standpoint, the solution is already "lost" as the design has failed and, in an embodiment, the current iteration is allowed to finish in a controlled manner. Eventually the optimization shall reach a material distribution with sufficient stiffness to carry the design load without a need for artificial force stabilization. Further, the stabilization methods provided by embodiments disclosed herein are "non-intrusive," meaning that while the structure has sufficient load carrying capacity by itself, the artificial stabilization forces are negligible and will only reach larger levels in the post-buckling range.

Further still, in embodiments design responses may be applied in the objective function and/or constraints, and the corresponding sensitivities can be determined at the same loading points. Embodiments also decrease runtime and computational costs, as no detailed analysis of the post-buckling range is included in the modeling, but the approach still allows the design responses in the pre-buckling to be applied in the optimization for increasing the buckling load. Existing optimization implementations and approaches can be reused and applied by embodiments as existing design responses (e.g., displacements) may directly be applied in both the objective function and/or constraints for sensitivity-based optimization. Further, existing numerical implementations and theories for sensitivity calculations (e.g., adjoint sensitivities for displacements) can directly be applied in the optimization of embodiments.

Computer Support

FIG. 23 is a simplified block diagram of a computer-based system 2320 that may be used to determine an optimized design of a real-world object according to any variety of embodiments described herein. The system 2320 comprises a bus 2323. The bus 2323 serves as an interconnect between the various components of the system 2320. Connected to the bus 2323 is an input/output device interface 2326 for connecting various input and output devices such as a keyboard, mouse, display, speakers, etc. to the system 2320. A central processing unit (CPU) 2322 is connected to the bus 2323 and provides for the execution of computer instructions implementing embodiments. Memory 2325 provides volatile storage for data used for carrying out computer instructions implementing embodiments described herein. Storage 2324 provides non-volatile storage for software instructions, such as an operating system (not shown) and embodiment configurations, etc. The system 2320 also comprises a network interface 2321 for connecting to any variety of networks known in the art, including wide area networks (WANs) and local area networks (LANs).

It should be understood that the example embodiments described herein may be implemented in many different ways. In some instances, the various methods and machines described herein may each be implemented by a physical, virtual, or hybrid general purpose computer, such as the computer system 2320, or a computer network environment such as the computer environment 2420, described herein below in relation to FIG. 24. The computer system 2320 may be transformed into the machines that execute the methods described herein, for example, by loading software instructions into either memory 2325 or non-volatile storage 2324 for execution by the CPU 2322. One of ordinary skill in the art should further understand that the system 2320 and its various components may be configured to carry out any embodiments or combination of embodiments described herein. Further, the system 2320 may implement the various embodiments described herein utilizing any combination of hardware, software, and firmware modules operatively coupled, internally, or externally, to the system 2320. Further, the system 2320 may be communicatively coupled to or be embedded within a manufacturing device so as to control the device to create a physical object with an optimized design as described herein.

FIG. 24 illustrates a computer network environment 2420 in which an embodiment of the present invention may be implemented. In the computer network environment 2420, the server 2421 is linked through the communications network 2422 to the clients 2423a-n. The environment 2420 may be used to allow the clients 2423a-n, alone or in combination with the server 2421, to execute any of the methods described herein. For non-limiting example, computer network environment 2420 provides cloud computing embodiments, software as a service (SAAS) embodiments, and the like.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

The teachings of all patents, published applications and references cited herein are incorporated by reference in their entirety.

References:

[1.1] Hutchinson J.W. and Koiter W.T. (1970) Post-buckling Theory, Applied Mechanics Reviews, Vol. 23, pp. 1353-1366.

[1.2] Zhou, Y., Stanciulescu, I., Eason, T., and Spottswood, M. (2015). Nonlinear elastic buckling and postbuckling analysis of cylindrical panels. Finite Elements in Analysis and Design, 96:41-50.

[1.3] Ikeda K, Murota K. Imperfect bifurcation in structures and materials. 3rd ed. New York: Springer, 2019.

[1.4] Ning X., Pellegrino S. (2015). Imperfection-insensitive axially loaded thin cylindrical shells. International Journal of Solid and Structures, 62(1): 39-51.

[1.5] W. T. Koiter, Elastic Stability of Solids and Structures, ed. A. M. A. van der Heijden. Cambridge University Press, Cambridge, 2009.

[2.1] Bruns, T.E., Sigmund, O., Tortorelli, D.A. (2002). Numerical methods for the topology optimization of structures that exhibit snap-through. Int J Numer Meth Engng 55:1215-1237.

[2.2] Bruns, T.E., Sigmund, O. (2004). Toward the topology design of mechanisms that exhibit snap-through behavior. Comput Methods Appl Mech Engrg 193:3973-4000.

[2.3] Kemmler, R., Lipka, A., Ramm, E. (2005). Large deformations and stability in topology optimization. Struct Multidisc Optim 30:459-476.

[2.4] Lindgaard, E., Dahl, J. (2013). On compliance and buckling objective functions in topology optimization of snap-through problems. Struct Multidisc Optim 47, 409-421.

[2.5] Lindgaard, E., & Lund, E. (2010). Nonlinear Buckling Optimization of Composite Structures. Computer Methods in Applied Mechanics and Engineering, 199(37-40), 2319-2330.

[2.6] Lindgaard, E., & Lund, E. (2011). A unified approach to nonlinear buckling optimization of composite structures. Computers & Structures, 89(3-4): 357-370.

[2.7] Ortigosa, R., Ruiz, D., Gil, A.J., Donoso, A., Bellido, J.C. (2020). A stabilisation approach for topology optimisation of hyperelastic structures with the SIMP method. Computer Methods in Applied Mechanics and Engineering, 364: 112924.

[3.1] Ohsaki, M., Nishiwaki, S. (2005). Shape design of pin-jointed multistable compliant mechanisms using snapthrough behavior. Struct Multidisc Optim 30: 327-334.

[3.2] Klarbring, A., Strömberg, N. (2013). Topology optimization of hyperelastic bodies including non-zero prescribed displacements. Struct Multidisc Optim 47: 37-48.

[4.1] Henrichsen, S.R., Weaver P.M., Lindgaard, E., Lund, E. (2016). Post-buckling optimization of composite structures using Koiter's method. International Journal for Numerical Methods in Engineering 108: 902-940.

[4.2] Liguori, F. S., Zucco, G., Madeo, A., Magisano, D., Leonetti, L., Garcea, G., Weaver, P. M. (2019). Postbuckling optimisation of a variable angle tow composite wingbox using a multi-modal Koiter approach. Thin-Walled Structures 138: 183-198.

[4.3] Liang, K., Zhou, Z. (2022). An efficient method for postbuckling optimization of composite laminated plates with holes under compression and shear loading. Acta Astronautica 130, 444-453.

[5.1] Lund, E. (2009). Buckling topology optimization of laminated multi-material composite shell structures. Composite Structures 91:158-167.

[5.2] Ferrari, F., Sigmund, O. (2023). A strategy for avoiding spurious localized buckling modes in topology optimization. International Journal for Numerical Methods in Engineering 124: 4118-4140.

[5.3] Ferrari, F., Sigmund, O. (2019). Revisiting topology optimization with buckling constraints. Struct Multidisc Optim 59: 1401-1415.

[6.1] Sigmund, O., Maute, K. (2013). Topology optimization approaches. Structural and Multidisciplinary Optimization, 48:1031-1055.

[6.2] Abaqus. (2024). SIMULIA User Assistance. Dassault Systèmes.

[6.3] Riks, E. (2008). On the Purpose and Limitations of Buckling Analysis. 2nd International Conference on Buckling and Postbuckling Behaviour of Composite Laminated Shell Structures, Braunschweig, Germany.

[6.4] Tosca. (2024). SIMULIA User Assistance. Dassault Systèmes.

[7.1] Kleiber, M., Antunez, H., Hien, T. D. and Kowalczyk, P. (1997). Parameter Sensitivity in Non-linear Mechanics, Theory and Finite Element Computations, John Wiley and Sons.

[7.2] Choi, K. K. and Kim, N. H (2005). Structural Sensitivity Analysis and Optimization 2: Nonlinear Systems and Applications, Springer-Verlag New York Inc.

[7.3] Michaleris, P., Tortorelli, D. A. and Vidal, C. A. (1994). Tangent Operators and Design Sensitivity Formulations for Transient Non-linear Coupled Problems with Applications to Elasto-Plasticity, International Journal for Numerical Methods in Engineering 37: 2471-2499.

**Claims**

1. A computer-implemented method for determining an optimized design of a real-world object, the method comprising, by a processor:

   defining, in memory of the processor, a computer-based model representing a real-world object;
   modifying the computer-based model to include at least one artificial force, wherein the at least one artificial force is defined as a function of physics-based behavior; and
   iteratively optimizing the real-world object with respect to load using the computer-based model modified, wherein a result of the iteratively optimizing is an optimized design of the real-world object.

2. The method of Claim 1, wherein the iteratively optimizing comprises, by the processor:

performing a simulation using the computer-based model modified;

based on a result of the simulation, evaluating compliance of a value of a property of the real-world object with respect to a design parameter; responsive to the evaluating determining the value of the property complies with the design parameter, determining the computer-based model modified represents the optimized design of the real-world object; and

responsive to the evaluating determining the value of the property does not comply with the design parameter, iterating: i) updating the computer-based model modified, ii) performing a simulation using the updated computer-based model modified, and iii) based on a result of the simulation performed using the updated computer-based model modified, evaluating compliance of the value of the property of the real-world object with respect to the design parameter, until the evaluating determines the value of the property complies with the design parameter.

3. The method of Claim 1, wherein the iteratively optimizing comprises, by the processor:

performing a simulation using the computer-based model modified.

4. The method of Claim 3, wherein performing the simulation comprises:

applying the load to the computer-based model modified;

determining a value of the physics-based behavior of the computer-based model caused by the load applied; and

based on the value of the physics-based behavior determined, applying the at least one artificial force to the computer-based model modified.

5. The method of Claim 4, wherein applying the at least one artificial force comprises:

responsive to the value of the physics-based behavior determined exceeding a threshold, counteracting a deformation in the computer-based model modified.

6. The method of any one of Claims 1 to 5, wherein the iteratively optimizing comprises, by the processor:

solving for a primal solution of equilibrium for the computer-based model modified;

determining a design response and at least one corresponding sensitivity with respect to a design variable of the computer-based model modified;

optimizing the real-world object using the computer-based model modified, the determined design response, and the at least one corresponding sensitivity, wherein a result of the optimizing is a converged design representing the optimized design of the real-world object or a non-compliant solution; and

responsive to the result of the optimizing being a non-compliant solution, modifying the at least one artificial force and iterating the solving, determining, and optimizing using the at least one artificial force modified.

7. The method of any one of Claims 1 to 6, wherein the at least one artificial force is configured to counter a deformation in the computer-based model modified responsive to a value of the physics-based behavior of the real-world object exceeding a threshold value.

8. The method of any one of Claims 1 to 7, wherein the physics-based behavior comprises at least one of: a displacement, a velocity, and an acceleration.

9. The method of any one of Claims 1 to 8, further comprising determining a buckling point within the real-world object.

10. The method of any one of Claims 1 to 9, wherein the at least one artificial force is configured to suppress a post-buckling response of the real-world object.

11. A computer-program for determining an optimized design of a real-world object, the computer-program comprising instructions which, when the program is executed by a computer, cause the computer to carry out the method of any one of claims 1 to 10.

12. A computer-implemented system for determining an optimized design of a real-world object, the system comprising:

a processor; and
a memory having recorded thereon the computer-program of claim 11.

13. A computer program product for determining an optimized design of a real-world object, the computer program product executed by a server in communication across a network with one or more clients and comprising:

a non-transitory computer readable medium, the computer readable medium having recorded thereon the computer-program of claim 11.

**Global Buckling**

102 — $P,u$

Global buckling of column in compression

103

101

**FIG. 1A**

111

External force $P$

$P_N$
$P_{N-1}$
$P_{N-2}$
$P_{N-3}$
$P_{N-4}$
.....
.....
$P_3$
$P_2$
$P_1$

**Pre- and Post-buckling**

110

No physical solution $u$ exists for these external loads

Buckling point

114

113

Pre- | Post-buckling range

115  116

112

Displacement $u$

**FIG. 1B**

**Added artificial forces**

121 — $P,u$

123

Added artificial forces suppressing post-buckling

122

**FIG. 1C**

131

External force $P_{stab}$

$P_N$
$P_{N-1}$
$P_{N-2}$
$P_{N-3}$
$P_{N-4}$
.....
.....
$P_3$
$P_2$
$P_1$

**Artificial suppressing post-buckling**

130

Artificial stabilized solution $u_{stab}$ for these external loads

Snap through

134

Buckling point

133

132

Displacement $u$

**FIG. 1D**

FIG. 2

**Physical system**  $+$  **Added artificial forces** $I_{art,stab}$  $=$  **Added artificial forces suppressing physical post-buckling**

311  310  321  320  331  330

312

External force $P$

314

Deformation pattern

315

Displacement $u$

313

FIG. 3A

Artificial forces $I_{art,stab}$

321

321

Displacement $u$

$u_{art,add}$

313

322

FIG. 3B

External force $P_{stab}$

332

Snap through

331

334

321

315

Displacement $u$

$u_{art,add}$

313

322

FIG. 3C

## Physical system

411

401

Design variables: $\{\phi\}$

407

Displacements:

- State variables of the primal solutions: $\{u\}$

404

- External boundary conditions: $\{u\}_p$

408

Forces:

- External loadings: $\{P\}$

403

- Reaction forces: $\{P\}_p$

405

- Internal forces: $\{I\}$

406

Residual fulfilling equilibrium for $\{R\} = \{0\}$:

408

Continuum

$\{u\}_p$

403

$\{P\}$

$\{u\}$ ——404

$$\left\{R\left(\{\phi\},\{u\},\{u\}_p,\{P\},\{P\}_p\right)\right\} = \{0\} = \begin{Bmatrix} \{R\}_f \\ \{R\}_p \end{Bmatrix} = \begin{Bmatrix} \{P(\{\phi\},\{u\})\} \\ \{P\}_p \end{Bmatrix} - \begin{Bmatrix} \{I(\{\phi\},\{u\},\{u\}_p)\} \\ \{I(\{\phi\},\{u\},\{u\}_p)\}_p \end{Bmatrix}$$

402

FIG. 4

EP 4 625 235 A1

**Physical system + Suppressing post-buckling using added artificial forces**

511 · 521 · 501

Continuum

512

Design variables: $\{\phi\}$

510

Displacements:

516 — - State variables of the primal solutions: $\{u\} = \left\{ \begin{array}{c} \{u\}_{f,stab} \\ \{u\}_f \end{array} \right\}$

503

512 — - External boundary conditions: $\{u\}_p$

Forces:

502

513 — - External loadings: $\{P\} = \left\{ \begin{array}{c} \{P\}_{ext,stab} \\ \{P\}_{ext} \end{array} \right\}$

507

DOFs having added artificial forces for suppressing the post-buckling of the physical system

514 — - Reaction forces: $\{P\}_p$

506

515 — - Internal forces: $\{I\}$

Residual fulfilling equilibrium for $\{R\} = \{0\}$:

$$\left\{ R\left( \{\phi\}, \{u\}_{f,stab}, \{u\}_f, \{u\}_p, \{P\}_{ext,stab}, \{P\}_{ext}, \{P\}_p \right) \right\} = \{0\}$$

$$= \left\{ \begin{array}{c} \{R\}_{f,stab} \\ \{R\}_f \\ \{R\}_p \end{array} \right\} = \left\{ \begin{array}{c} \left\{ P\left( \{\phi\}, \{u\}_{f,stab} \right) \right\}_{ext,stab} \\ \left\{ P\left( \{\phi\}, \{u\}_f \right) \right\}_{ext} \\ \{P\}_p \end{array} \right\} - \left\{ \begin{array}{c} \left\{ I\left( \{\phi\}, \{u\}_{f,stab}, \{u\}_f, \{u\}_p \right) \right\}_{f,stab} \\ \left\{ I\left( \{\phi\}, \{u\}_{f,stab}, \{u\}_f, \{u\}_p \right) \right\}_f \\ \left\{ I\left( \{\phi\}, \{u\}_{f,stab}, \{u\}_f, \{u\}_p \right) \right\}_p \end{array} \right\} - \left\{ \begin{array}{c} \left\{ I\left( \{u\}_{f,stab} \right) \right\}_{ext,stab} \\ \{0\} \\ \{0\} \end{array} \right\}$$

508

$\{u\}_p$

502

$\{P\}_{ext,stab}$

$\{P\}_{ext}$

506

$\{u\}_f$

507

$\{u\}_{f,stab}$

503

FIG. 5

FIG. 6

EP 4 625 235 A1

## <u>Determining Primal Solution of Physical system + Suppress post-buckling using added artificial forces</u>

Equilibrium determined for residual $\{R\} = \{0\}$:

$$\{R\}_u = \{0\} = \begin{Bmatrix} \{R\}_{f,stab} \\ \{R\}_f \end{Bmatrix} = \begin{Bmatrix} \{P\}_{ext,stab} \\ \{P\}_{ext} \end{Bmatrix} - \begin{Bmatrix} \{I\}_{f,stab} \\ \{I\}_f \end{Bmatrix} - \begin{Bmatrix} \{I\}_{art,stab} \\ \{0\} \end{Bmatrix}$$

721

Frequently, the primal solution is determined using a fist order Newton-Raphsons iterative scheme:

$$\{u\}_{i+1} = \{u\}_i + \{\Delta u\}_i \quad \text{where} \quad -\frac{\partial \{R\}_u}{\partial \{u\}_i} \{\Delta u\}_i = \{R\}_i \quad \Rightarrow \quad \{\Delta u\}_i = -\left(\frac{\partial \{R\}_u}{\partial \{u\}_i}\right)^{-1} \{R\}_i$$

where $i$ is the number of optimization iterations for determining the residual and corresponding primal solution. and the partial derivative of the residual yields:

$$\frac{\partial \{R\}_u}{\partial \{u\}} = \frac{\partial \begin{Bmatrix} \{R\}_{f,stab} \\ \{R\}_f \end{Bmatrix}}{\partial \begin{Bmatrix} \{u\}_{f,stab} \\ \{u\}_f \end{Bmatrix}} = \begin{bmatrix} \dfrac{\partial \{R\}_{f,stab}}{\partial \{u\}_{f,stab}} & \dfrac{\partial \{R\}_f}{\partial \{u\}_{f,stab}} \\ \dfrac{\partial \{R\}_{f,stab}}{\partial \{u\}_f} & \dfrac{\partial \{R\}_f}{\partial \{u\}_f} \end{bmatrix}$$

702

and

$$\frac{\partial \{R\}_{f,stab}}{\partial \{u\}_{f,stab}} = \frac{\partial \{P\}_{ext,stab}}{\partial \{u\}_{f,stab}} - \frac{\partial \{I\}_{f,stab}}{\partial \{u\}_{f,stab}} - \frac{\partial \{I\}_{art,stab}}{\partial \{u\}_{f,stab}}$$

$$= \frac{\partial \{P\}_{ext,stab}}{\partial \{u\}_{f,stab}} - \frac{\partial \{I\}_{f,stab}}{\partial \{u\}_{f,stab}} - [K_{art}]$$

701

Where we define the **operator matrix term** $K_{art}$
**for the partial derivative of the artificial forces**
with respect to the primal solution being added for
suppressing the post-buckling of the physical system:

$$\frac{\partial \{I\}_{art,stab}}{\partial \{u\}_{f,stab}} = [K_{art}]$$

701

700

FIG. 7

## Discontinuous linear

Artificial forces $I_{art,stab}$

821a

810

Pre-buckling
$\overleftarrow{\phantom{xx}}$
$I_{art,high} = 0$

Post-buckling
$\overrightarrow{\phantom{xx}}$
$I_{art,high} \gg 0$

$K_{art} = \dfrac{dI_{art,stab}}{du_{f,stab}}$

801a

$K_{art,high} \gg 0$

$K_{art,low} = 0$

Displacement $u$

822a

$u_{art,add}$

804a

FIG. 8A

## Bi-linear

Artificial forces $I_{art,stab}$

821b

820

Pre-buckling
$\overleftarrow{\phantom{xx}}$
$I_{art,high} \approx 0$

Post-buckling
$\overrightarrow{\phantom{xx}}$
$I_{art,high} \gg 0$

$K_{art} = \dfrac{dI_{art,stab}}{du_{f,stab}}$

801b

$K_{art,high} \gg 0$

$K_{art,low} \ll 0$

Displacement $u$

822b

$u_{art,add}$

804b

FIG. 8B

## Smooth non-linear

Artificial forces $I_{art,stab}$

821c

830

Pre-buckling
$\overleftarrow{\phantom{xx}}$
$I_{art,high} \approx 0$

Post-buckling
$\overrightarrow{\phantom{xx}}$
$\boldsymbol{I_{art,high} \gg 0}$

$K_{art} = \dfrac{dI_{art,stab}}{du_{f,stab}}$

801c

$K_{art,high} \gg 0$

$K_{art,low} \ll 0$

Displacement $u$

822c

$u_{art,add}$

804c

FIG. 8C

If $K_{art} \gg 0$ <u>and</u> $u_{f,stab}$ is higher than $u_{art,add}$ which is the case for many buckling optimization formulations then:

$$\left[K_{art}\right] = \frac{\partial \{I\}_{art,stab}}{\partial \{u\}_{f,stab}} \gg 0 \quad \text{if} \quad \{u\}_{f,stab} > \{u\}_{art,add} \quad \Rightarrow \quad \frac{\partial \{R\}_{f,stab}}{\partial \{u\}_{f,stab}} = \frac{\partial \{P\}_{ext,stab}}{\partial \{u\}_{f,stab}} - \frac{\partial \{I\}_{f,stab}}{\partial \{u\}_{f,stab}} - \frac{\partial \{I\}_{art,stab}}{\partial \{u\}_{f,stab}} \approx -\left[K_{art}\right]$$

901

Solving for solution of system:

$$\approx -\begin{bmatrix} -\left[K_{art}\right] & [0] \\ \dfrac{\partial \{R\}_{f,stab}}{\partial \{u\}_f} & \dfrac{\partial \{R\}_f}{\partial \{u\}_f} \end{bmatrix} \begin{Bmatrix} \Delta\{u\}_{f,stab} \\ \Delta\{u\}_f \end{Bmatrix}_i = \begin{Bmatrix} \{R\}_{f,stab} \\ \{R\}_f \end{Bmatrix}_i \quad \Rightarrow \quad \boxed{\Delta\{u\}_{f,stab} = \left[K_{art}\right]^{-1}\{R\}_{f,stab}}$$

903

$$\Rightarrow \quad \Delta\{u\}_f = \left(\frac{\partial \{R\}_f}{\partial \{u\}_f}\right)^{-1}\left(\{R\}_f\}_i - \left(\frac{\partial \{R\}_{f,stab}}{\partial \{u\}_f}\right)\Delta\{u\}_{f,stab}\right)$$

903

900

FIG. 9

The design response *DRESP* and the Lagrange multiplier:

$$
DRESP = DRESP + \{\lambda\}^T \left( \left\{ R\left(\{\phi\},\{u\}_{f,stab},\{u\}_f,\{u\}_p,\{P\}_{ext,stab},\{P\}_{ext},\{P\}_p \right) \right\} \right) = DRESP + \left\{ \begin{array}{c} \{\lambda\}_{f,stab} \\ \{\lambda\}_f \\ \{\lambda\}_p \end{array} \right\}^T \left[ \begin{array}{c} \left\{ R\left(\{\phi\},\{u\}_{f,stab},\{u\}_f,\{u\}_p,\{P\}_{ext,stab}\right) \right\}_{f,stab} \\ \left\{ R\left(\{\phi\},\{u\}_{f,stab},\{u\}_f,\{u\}_p,\{P\}_{ext}\right) \right\}_f \\ \left\{ R\left(\{\phi\},\{u\}_{f,stab},\{u\}_f,\{u\}_p,\{P\}_p\right) \right\}_p \end{array} \right]
$$

$$
\Rightarrow
$$

$$
\frac{dDRESP}{d\phi_i} = \frac{\partial DRESP}{\partial \phi_i} + \frac{\partial DRESP}{\partial \{u\}_{f,stab}} \frac{d\{u\}_{f,stab}}{d\phi_i} + \frac{\partial DRESP}{\partial \{u\}_f} \frac{d\{u\}_f}{d\phi_i} + \frac{\partial DRESP}{\partial \{P\}_{ext,stab}} \frac{d\{P\}_{ext,stab}}{d\phi_i} + \frac{\partial DRESP}{\partial \{P\}_{ext}} \frac{d\{P\}_{ext}}{d\phi_i} + \frac{\partial DRESP}{\partial \{P\}_p} \frac{d\{P\}_p}{d\phi_i}
$$

$$
+ \left\{ \begin{array}{c} \{\lambda\}_{f,stab} \\ \{\lambda\}_f \\ \{\lambda\}_p \end{array} \right\}^T \left[ \begin{array}{c} \dfrac{\partial \{R\}_{f,ext}}{\partial \phi_i} + \dfrac{\partial \{R\}_{f,stab}}{\partial \{u\}_{f,stab}} \dfrac{d\{u\}_{f,stab}}{d\phi_i} + \dfrac{\partial \{R\}_{f,stab}}{\partial \{u\}_f} \dfrac{d\{u\}_f}{d\phi_i} + \dfrac{\partial \{R\}_{f,stab}}{\partial \{P\}_{ext,stab}} \dfrac{d\{P\}_{ext,stab}}{d\phi_i} \\ \\ \dfrac{\partial \{R\}_f}{\partial \phi_i} + \dfrac{\partial \{R\}_f}{\partial \{u\}_{f,stab}} \dfrac{d\{u\}_{f,stab}}{d\phi_i} + \dfrac{\partial \{R\}_f}{\partial \{u\}_f} \dfrac{d\{u\}_f}{d\phi_i} + \dfrac{\partial \{R\}_{ext}}{\partial \{P\}_{ext}} \dfrac{d\{P\}_{ext}}{d\phi_i} \\ \\ \dfrac{\partial \{R\}_p}{\partial \phi_i} + \dfrac{\partial \{R\}_p}{\partial \{u\}_{f,stab}} \dfrac{d\{u\}_{f,stab}}{d\phi_i} + \dfrac{\partial \{R\}_p}{\partial \{u\}_f} \dfrac{d\{u\}_f}{d\phi_i} + \dfrac{\partial \{R\}_p}{\partial \{P\}_p} \dfrac{d\{P\}_p}{d\phi_i} \end{array} \right]
$$

FIG. 10A

where $\dfrac{d\{P\}_p}{d\phi_i}$ is eliminated by:

$$\left(\frac{\partial DRESP}{\partial\{P\}_p}+\{\lambda\}_p^T\frac{\partial\{R\}_p}{\partial\{P\}_p}\right)\frac{d\{P\}_p}{d\phi_i}=\{0\}\quad\Rightarrow\quad\{\lambda\}_p=-\left(\frac{\partial DRESP}{\partial\{P\}_p}\right)^T$$

where $\dfrac{d\{u\}_{f,stab}}{d\phi_i}$ and $\dfrac{d\{u\}_f}{d\phi_i}$ is eliminated by for obtaining the adjoint system:

$$\left(\frac{\partial DRESP}{\partial\{u\}_{f,stab}}+\left\{\begin{array}{c}\{\lambda\}_{f,stab}\\\{\lambda\}_f\\\{\lambda\}_p\end{array}\right\}^T\left[\begin{array}{c}\frac{\partial\{R\}_{f,stab}}{\partial\{u\}_{f,stab}}\\\frac{\partial\{R\}_f}{\partial\{u\}_{f,stab}}\\\frac{\partial\{R\}_p}{\partial\{u\}_{f,stab}}\end{array}\right],\frac{\partial DRESP}{\partial\{u\}_f}+\left\{\begin{array}{c}\{\lambda\}_{f,stab}\\\{\lambda\}_f\\\{\lambda\}_p\end{array}\right\}^T\left[\begin{array}{c}\frac{\partial\{R\}_{f,stab}}{\partial\{u\}_f}\\\frac{\partial\{R\}_f}{\partial\{u\}_f}\\\frac{\partial\{R\}_p}{\partial\{u\}_f}\end{array}\right]\right)\left\{\begin{array}{c}\frac{d\{u\}_{f,stab}}{d\phi_i}\\\frac{d\{u\}_f}{d\phi_i}\end{array}\right\}=\{0\}$$

$$\Rightarrow\left\{\begin{array}{c}\{\lambda\}_{f,stab}\\\{\lambda\}_f\end{array}\right\}=-\left[\begin{array}{cc}\left(\frac{\partial\{R\}_{f,stab}}{\partial\{u\}_{f,stab}}\right)^T&\left(\frac{\partial\{R\}_f}{\partial\{u\}_{f,stab}}\right)^T\\\left(\frac{\partial\{R\}_{f,stab}}{\partial\{u\}_f}\right)^T&\left(\frac{\partial\{R\}_f}{\partial\{u\}_f}\right)^T\end{array}\right]^{-1}\left(\left\{\begin{array}{c}\left(\frac{\partial DRESP}{\partial\{u\}_{f,stab}}\right)^T\\\left(\frac{\partial DRESP}{\partial\{u\}_f}\right)^T\end{array}\right\}-\{\lambda\}_p\left\{\begin{array}{c}\left(\frac{\partial\{R\}_p}{\partial\{u\}_{f,stab}}\right)^T\\\left(\frac{\partial\{R\}_p}{\partial\{u\}_f}\right)^T\end{array}\right\}\right)$$

Then the sensitivites of design response *DRESP* with respect to the design variable $\phi_i$ is determined by:

$$\frac{dDRESP}{d\phi_i}=\frac{\partial DRESP}{\partial\phi_i}+\frac{\partial DRESP}{\partial\{u\}_p}\frac{d\{u\}_p}{d\phi_i}+\frac{\partial DRESP}{\partial\{P\}_{ext,stab}}\frac{d\{P\}_{ext,stab}}{d\phi_i}+\frac{\partial DRESP}{\partial\{P\}_{ext}}\frac{d\{P\}_{ext}}{d\phi_i}+\left\{\begin{array}{c}\{\lambda\}_{f,stab}\\\{\lambda\}_f\\\{\lambda\}_p\end{array}\right\}^T\left\{\begin{array}{c}\frac{\partial\{R\}_{f,stab}}{\partial\phi_i}+\frac{\partial\{R\}_{ext,stab}}{\partial\{P\}_{ext,stab}}\frac{d\{P\}_{ext,stab}}{d\phi_i}\\\frac{\partial\{R\}_f}{\partial\phi_i}+\frac{\partial\{R\}_{ext}}{\partial\{P\}_{ext}}\frac{d\{P\}_{ext}}{d\phi_i}\\\frac{\partial\{R\}_p}{\partial\phi_i}\end{array}\right\}$$

1011

1014

1012

1013

FIG. 10B

29

The **operator matrix term $K_{art}$ for the partial derivative of the artificial forces** being added for suppressing the post-buckling of the physical system:

1101

$$\left[K_{art}\right] = \frac{\partial \{I\}_{art,stab}}{\partial \{u\}_{f,stab}} \gg 0 \quad \text{if} \quad \{u\}_{f,stab} > \{u\}_{art,add}$$

If $K_{art} \gg 0$ <u>and</u> the Design Response *DRESP* is only a function of the displacements $u_{f,stab}$ [DRESP($u_{f,stab}$)] which is the case for many buckling optimization formulations then:

1123   1122

$$\text{If} \quad \underline{\{u\}_{f,stab} > \{u\}_{art,add}} \quad \Rightarrow \quad \left(\frac{\partial \{R\}_{f,stab}}{\partial \{u\}_{f,stab}}\right)^T = \left(\frac{\partial \{P\}_{ext,stab}}{\partial \{u\}_{f,stab}}\right)^T - \left(\frac{\partial \{I\}_{f,stab}}{\partial \{u\}_{f,stab}}\right)^T - \left(\frac{\partial \{I\}_{art,stab}}{\partial \{u\}_{f,stab}}\right)^T \approx -\left[K_{art}\right]^T$$

Adjoint system:

$$\approx \begin{bmatrix} -\left[K_{art}\right]^T & [0] \\ \left(\frac{\partial \{R\}_{f,stab}}{\partial \{u\}_f}\right)^T & \left(\frac{\partial \{R\}_f}{\partial \{u\}_f}\right)^T \end{bmatrix} \begin{Bmatrix} \{\lambda\}_{f,stab} \\ \{\lambda\}_f \end{Bmatrix} = -\begin{Bmatrix} \frac{\partial DRESP}{\partial \{u\}_{f,stab}} \\ \{0\} \end{Bmatrix}^T \quad \Rightarrow \quad \boxed{\{\lambda\}_{f,stab} = \left[K_{art}\right]^{-T} \left\{\frac{\partial DRESP}{\partial \{u\}_{f,stab}}\right\}^T}$$

1103

$$\Rightarrow \quad \{\lambda\}_f = -\left(\frac{\partial \{R\}_f}{\partial \{u\}_f}\right)^{-T} \left(\frac{\partial \{R\}_{f,stab}}{\partial \{u\}_f}\right)^T \{\lambda\}_{f,stab}$$

1103

1100

FIG. 11

The sensitivites of design response *DRESP* with respect to the design variable $\phi_i$ is determined by:

$$\frac{dDRESP}{d\phi_i} = \frac{\partial DRESP}{\partial \phi_i} - \frac{\partial DRESP}{\partial \{u\}_{f,stab}}\frac{d\{u\}_{f,stab}}{d\phi_i} + \frac{\partial DRESP}{\partial \{u\}_f}\frac{d\{u\}_f}{d\phi_i} + \frac{\partial DRESP}{\partial \{P\}_{ext,stab}}\frac{d\{P\}_{ext,stab}}{d\phi_i} + \frac{\partial DRESP}{\partial \{P\}_{ext}}\frac{d\{P\}_{ext}}{d\phi_i} + \frac{\partial DRESP}{\partial \{P\}_p}\frac{d\{P\}_p}{d\phi_i}$$

The residual:

$$\left\{R\left(\{\phi\},\{u\}_{f,stab},\{u\}_f,\{u\}_p,\{P\}_{ext,stab},\{P\}_{ext},\{P\}_p\right)\right\} = \begin{Bmatrix} \{R\}_{f,stab} \\ \{R\}_f \\ \{R\}_p \end{Bmatrix} = \{0\}$$

where $\dfrac{d\{u\}_{f,stab}}{d\phi_i}$ and $\dfrac{d\{u\}_f}{d\phi_i}$ are determined by the direct derivatives of the system:

$$\left.\begin{aligned}\frac{d\{R\}_{f,ext}}{d\phi_i} &= \frac{\partial\{R\}_{f,ext}}{\partial\phi_i}+\frac{\partial\{R\}_{f,stab}}{\partial\{u\}_{f,stab}}\frac{d\{u\}_{f,stab}}{d\phi_i}+\frac{\partial\{R\}_{f,stab}}{\partial\{u\}_f}\frac{d\{u\}_f}{d\phi_i}+\frac{\partial\{R\}_{f,stab}}{\partial\{P\}_{ext,stab}}\frac{d\{P\}_{ext,stab}}{d\phi_i} = \{0\} \\ \frac{d\{R\}_f}{d\phi_i} &= \frac{\partial\{R\}_f}{\partial\phi_i}+\frac{\partial\{R\}_f}{\partial\{u\}_{f,stab}}\frac{d\{u\}_{f,stab}}{d\phi_i}+\frac{\partial\{R\}_f}{\partial\{u\}_f}\frac{d\{u\}_f}{d\phi_i}+\frac{\partial\{R\}_{ext}}{\partial\{P\}_{ext}}\frac{d\{P\}_{ext}}{d\phi_i} = \{0\}\end{aligned}\right\} \Rightarrow \begin{Bmatrix}\dfrac{d\{u\}_{f,stab}}{d\phi_i}\\[4pt]\dfrac{d\{u\}_f}{d\phi_i}\end{Bmatrix} = -\begin{bmatrix}\dfrac{\partial\{R\}_{f,stab}}{\partial\{u\}_{f,stab}} & \dfrac{\partial\{R\}_{f,stab}}{\partial\{u\}_f}\\[4pt]\dfrac{\partial\{R\}_f}{\partial\{u\}_{f,stab}} & \dfrac{\partial\{R\}_f}{\partial\{u\}_f}\end{bmatrix}^{-1}\left(\begin{Bmatrix}\dfrac{\partial\{R\}_{f,ext}}{\partial\phi_i}\\[4pt]\dfrac{\partial\{R\}_f}{\partial\phi_i}\end{Bmatrix} + \begin{Bmatrix}\dfrac{\partial\{R\}_{f,stab}}{\partial\{P\}_{ext,stab}}\dfrac{d\{P\}_{ext,stab}}{d\phi_i}\\[4pt]\dfrac{\partial\{R\}_{ext}}{\partial\{P\}_{ext}}\dfrac{d\{P\}_{ext}}{d\phi_i}\end{Bmatrix}\right)$$

following $\dfrac{d\{P\}_p}{d\phi_i}$ is determined by:

$$\frac{d\{R\}_p}{d\phi_i} = \frac{\partial\{R\}_p}{\partial\phi_i}+\frac{\partial\{R\}_p}{\partial\{u\}_{f,stab}}\frac{d\{u\}_{f,stab}}{d\phi_i}+\frac{\partial\{R\}_p}{\partial\{u\}_f}\frac{d\{u\}_f}{d\phi_i}+\frac{\partial\{R\}_p}{\partial\{P\}_p}\frac{d\{P\}_p}{d\phi_i} = \{0\} \Rightarrow \frac{\partial\{R\}_p}{\partial\{P\}_p}\frac{d\{P\}_p}{d\phi_i} = -\frac{\partial\{R\}_p}{\partial\phi_i}-\frac{\partial\{R\}_p}{\partial\{u\}_{f,stab}}\frac{d\{u\}_{f,stab}}{d\phi_i}-\frac{\partial\{R\}_p}{\partial\{u\}_f}\frac{d\{u\}_f}{d\phi_i}$$

1200

FIG. 12

The **operator matrix term $K_{art}$ for the partial derivative of the artificial forces** being added for suppressing the post-buckling of the physical system:

$$\left[K_{art}\right] = \frac{\partial\{I\}_{art,stab}}{\partial\{u\}_{f,stab}} \gg 0 \quad \text{if} \quad \{u\}_{f,stab} > \{u\}_{art,add}$$

1301

If $K_{art} \gg 0$ which is the case for many buckling optimization formulations then:

1323  1322

$$\text{If} \quad \{u\}_{f,stab} > \{u\}_{art,add} \quad \Rightarrow \quad \frac{\partial\{R\}_{f,stab}}{\partial\{u\}_{f,stab}} = \frac{\partial\{P\}_{ext,stab}}{\partial\{u\}_{f,stab}} - \frac{\partial\{I\}_{f,stab}}{\partial\{u\}_{f,stab}} - \frac{\partial\{I\}_{art,stab}}{\partial\{u\}_{f,stab}} \approx -\left[K_{art}\right]$$

Direct derivatives of system :

$$\approx \begin{bmatrix} -\left[K_{art}\right] & [0] \\ \dfrac{\partial\{R\}_f}{\partial\{u\}_{f,stab}} & \dfrac{\partial\{R\}_f}{\partial\{u\}_f} \end{bmatrix} \begin{Bmatrix} \dfrac{d\{u\}_{f,stab}}{d\phi_i} \\ \dfrac{d\{u\}_f}{d\phi_i} \end{Bmatrix} = -\begin{Bmatrix} \dfrac{\partial\{R\}_{f,ext}}{\partial\phi_i} \\ \dfrac{\partial\{R\}_f}{\partial\phi_i} \end{Bmatrix} - \begin{Bmatrix} \dfrac{\partial\{R\}_{f,stab}}{\partial\{P\}_{ext,stab}}\dfrac{d\{P\}_{ext,stab}}{d\phi_i} \\ \dfrac{\partial\{R\}_{ext}}{\partial\{P\}_{ext}}\dfrac{d\{P\}_{ext}}{d\phi_i} \end{Bmatrix} \Rightarrow \boxed{\frac{d\{u\}_{f,stab}}{d\phi_i} = \left[K_{art}\right]^{-1}\left(\frac{\partial\{R\}_{f,ext}}{\partial\phi_i} + \frac{\partial\{R\}_{f,stab}}{\partial\{P\}_{ext,stab}}\frac{d\{P\}_{ext,stab}}{d\phi_i}\right)}$$

$$\Rightarrow \quad \frac{d\{u\}_f}{d\phi_i} = -\left(\frac{\partial\{R\}_f}{\partial\{u\}_f}\right)^{-1}\left(\left\{\frac{\partial\{R\}_f}{\partial\phi_i}\right\} + \left\{\frac{\partial\{R\}_{ext}}{\partial\{P\}_{ext}}\frac{d\{P\}_{ext}}{d\phi_i}\right\} + \frac{\partial\{R\}_f}{\partial\{u\}_{f,stab}}\left[\frac{d\{u\}_{f,stab}}{d\phi_i}\right]\right)$$

1300

FIG. 13

**Minimize overall displacements:** $\sum_{i=1}^{I} u_i$

1401

External force $P_{stab}$

1432a

1413g
Buckling point of optimized design

1413f
Optimized design

1413e
Initial design

1413d
Buckling point of initial design

1413c

1413b

1413a

$u_I$
$u_{I-1}$
$u_{I-2}$
$u_{I-3}$

$u_{i+1}$
$u_i$

$u_1$

$P_I$
$P_{I-1}$
$P_{I-2}$
$P_{I-3}$
.....
$P_{i+1}$
$P_i$
.....
$P_1$

1412c
1412b
1412a

1411

1412g
1412f
1412e
1412d

□ : initial design
○ : optimized design

Buckling point of initial design

1410

Displacement $u$

1434a

FIG. 14A

**Constraining displacement** $u_i \le u_i^*$

1402

External force $P_{stab}$

1432b

1405
Buckling point of optimized design

Optimized design

1404

$P_i$

$u_i$
$u_i^*$

Initial design

Buckling point of initial design

1409

□ : initial design
○ : optimized design

Displacement $u$

1434b

FIG. 14B

EP 4 625 235 A1

33

**Loads and Boundary conditions**

1500a

Dimensions:
- L=700 mm
- H=170 mm
- W=50 mm
- T(flange)=5 mm
- T(web)=3 mm

Compressive load

Bending load

1512

1511

Loading + Boundary conditions:
- Fully clamped
- Combined compressive and bending loading
- Load point connected to end plane using kinematic coupling

Fully clamped

1510

Nonlinear modeling:
- Elastoplastic material
- Large deformations

FIG. 15A

**Finite element model**

1500b

Finite element mesh:
- C3D10 ten-node tetrahedral element
- Average element size ~ 3 mm
- Number of elements: 296384
- Number of nodes: 400623

FIG. 15B

**Imperfections**

1500c

- E.g. manufacturing imperfections

- Unperturbed geometry

- Perturbed geometry using imperfections 1513

FIG. 15C

**Topology optimization design variables**

1500d

- Non-design area

- Four design areas 1514

FIG. 15D

EP 4 625 235 A1

FIG. 16

**Minimize overall displacements:**

1710

External force

1711

■ : initial design
● : optimized design

Post-buckling range:
Artificial stabilized
solution for these
external loads

No buckling
for optimized design

1713

Minimize
summarized
displacements $\sum\limits_{i=1}^{I=20} u_i$

1714

Buckling for initial design
at approximately 78% loading

Displacement $u$

1712  FIG. 17A

**Initial design**

**Design variable:
Relative density**

**Optimized design**

1720

+1.000e+00
+9.167e-01
+8.335e-01
+7.502e-01
+6.670e-01
+5.837e-01
+5.005e-01
+4.172e-01
+3.340e-01
+2.508e-01
+1.675e-01
+8.425e-02
+1.000e-03

1714

1702a

1715a

1702b

1716a

1713

**Deformations:
Displacements**

$u_{max}$

1702a

Buckling at approximately
78% loading

1702b

No buckling

1715b

1721

1716b

FIG. 17B

FIG. 17C

EP 4 625 235 A1

**Minimize Objective function – Sum of displacements [mm]** — 1810

Switching from initial design buckling to non-buckling design configuration

1812a

Displacement

1815

Optimization iteration

1811a

FIG. 18A

**Relative mass constraint of 50%** — 1820

1812b

Relative Mass

Mass constraint of 50% — 1813
Relative mass — 1814

Optimization iteration

1811b

FIG. 18B

FIG. 18C

**Geometrical LINEAR optimized design**

Design variable:
Relative density

1930

```
+1.000e+00
+9.167e-01
+8.335e-01
+7.502e-01
+6.670e-01
+5.837e-01
+5.005e-01
+4.172e-01
+3.340e-01
+2.508e-01
+1.675e-01
+8.425e-02
+1.000e-03
```

1920a

1901a

1920b

Buckling at
approximately
90% of full loading

External
force    1903a

1901b

1901a

Displacement *u*    1904a

FIG. 19A

Deformations:
Displacements
$u_{max}$

1931

**Geometrical NON-Linear optimized design**

1940a

1902a

1940b

No buckling

External
1903b    force

1902b

1902a

Displacement *u*    1904b

FIG. 19B

**Displacement constraints** — 2000

External force — 2001

2004

■ : initial design
● : optimized design

2003

**Post-buckling range: Artificial stabilized solution for these external loads**

No buckling for optimized design

Constraining displacements $u_i \leq 14 \text{ mm}$

Buckling for initial design at approximately 80% loading

2005

2002

Displacement $u$

FIG. 20A

**Initial design**

2003

2022

2020a

2022

2020b

**Buckling at approximately 78% loading**

2022

FIG. 20B

Design variable: Relative density

2030

+1.000e+00
+9.167e-01
+8.335e-01
+7.502e-01
+6.670e-01
+5.837e-01
+5.005e-01
+4.172e-01
+3.340e-01
+2.508e-01
+1.675e-01
+8.425e-02
+1.000e-03

2022

Deformations: Displacements

2031

$u_{max}$

2022

**Optimized design**

2040a

2004

2040b

**No buckling**

FIG. 20C

EP 4 625 235 A1

2110

**20 Displacement constraints**

Switching from initial design buckling to non-buckling design configuration

- - - Displacement constraints: 14 mm

Displacement

50  40  30  20  10  0

2104

2105

2103

Optimization iteration
0  20  40  60  80  100

FIG. 21B

2100

**Objective function - Minimize relative mass**

Relative Mass

0.75  0.5  0.25  0

2102

2101

Optimization iteration
0  25  50  75  100

FIG. 21A

FIG. 22A

FIG. 22B

FIG. 23

2320

Network Interface 2321

CPU 2322

2323

BUS

Input/Output Device Interface 2326

2324

Storage

Memory 2325

FIG. 24

Europäisches
Patentamt

European
Patent Office

Office européen
des brevets

## EUROPEAN SEARCH REPORT

**Application Number**

EP 25 16 6320

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG XIN ET AL: "Bi-objective topology optimization of asymmetrical fixed-geometry microvalve for non-Newtonian flow", MICROSYSTEM TECHNOLOGIES, BERLIN, DE, vol. 25, no. 6, 22 September 2018 (2018-09-22), pages 2471-2479, XP036798850, ISSN: 0946-7076, DOI: 10.1007/S00542-018-4146-1 [retrieved on 2018-09-22] * abstract * * page 2471 - page 2477 * | 1-4,6,8, 11-13 | INV. G06F30/17 G06F30/23  ADD. G06F111/06 G06F119/14 |
| X | DALKLINT ANNA ET AL: "Structural stability and artificial buckling modes in topology optimization", STRUCTURAL AND MULTIDISCIPLINARY OPTIMIZATION, SPRINGER BERLIN HEIDELBERG, BERLIN/HEIDELBERG, vol. 64, no. 4, 21 August 2021 (2021-08-21), pages 1751-1763, XP037582033, ISSN: 1615-147X, DOI: 10.1007/S00158-021-03012-Z [retrieved on 2021-08-21] * abstract * * page 1751 - page 1758 * | 1-13 | |

TECHNICAL FIELDS SEARCHED (IPC)

G06F

-/--

The present search report has been drawn up for all claims

| Place of search | Date of completion of the search | Examiner |
|---|---|---|
| Munich | 24 June 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 6320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYUN JAEYUB ET AL: "Topology optimization of the shear thinning non-Newtonian fluidic systems for minimizing wall shear stress", COMPUTERS & MATHEMATICS WITH APPLICATIONS, ELSEVIER, AMSTERDAM, NL, vol. 67, no. 5, 3 February 2014 (2014-02-03), pages 1154-1170, XP028665447, ISSN: 0898-1221, DOI: 10.1016/J.CAMWA.2013.12.013 * abstract * * page 1154 - page 1158 * | 1-4,6,8, 11-13 | |
| X | TYAS A ET AL: "Practical plastic layout optimization of trusses incorporating stability considerations", COMPUTERS AND STRUCTURES, PERGAMON PRESS, GB, vol. 84, no. 3-4, 1 January 2006 (2006-01-01), pages 115-126, XP027991547, ISSN: 0045-7949 [retrieved on 2006-01-01] * abstract * * page 115 - page 123 * | 1-6,8-13 | **TECHNICAL FIELDS SEARCHED** (IPC) |
| A | KEMMLER R ET AL: "Large deformations and stability in topology optimization", STRUCTURAL AND MULTIDISCIPLINARY OPTIMIZATION, SPRINGER, BERLIN, DE, vol. 30, no. 6, 1 December 2005 (2005-12-01), pages 459-476, XP019324242, ISSN: 1615-1488, DOI: 10.1007/S00158-005-0534-0 * the whole document * | 1-13 | |

The present search report has been drawn up for all claims

| Place of search | Date of completion of the search | Examiner |
|---|---|---|
| Munich | 24 June 2025 | Radev, Boyan |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63570035

**Non-patent literature cited in the description**

- **HUTCHINSON J.W.** ; **KOITER W.T.** Postbuckling Theory. *Applied Mechanics Reviews*, 1970, vol. 23, 1353-1366
- **ZHOU, Y.** ; **STANCIULESCU, I.** ; **EASON, T** ; **SPOTTSWOOD, M.** Nonlinear elastic buckling and postbuckling analysis of cylindrical panels.. *Finite Elements in Analysis and Design*, 2015, vol. 96, 41-50
- **IKEDA K** ; **MUROTA K.** Imperfect bifurcation in structures and materials. Springer, 2019
- **NING X.** ; **PELLEGRINO S.** Imperfection-insensitive axially loaded thin cylindrical shells.. *International Journal of Solid and Structures*, 2015, vol. 62 (1), 39-51
- **W. T. KOITER**. Elastic Stability of Solids and Structures. Cambridge University Press, 2009
- **BRUNS, T.E.** ; **SIGMUND, O.** ; **TORTORELLI, D.A.** Numerical methods for the topology optimization of structures that exhibit snap-through.. *Int J Numer Meth Engng*, 2002, vol. 55, 1215-1237
- **BRUNS, T.E.** ; **SIGMUND, O.** Toward the topology design of mechanisms that exhibit snap-through behavior.. *Comput Methods Appl Mech Engrg*, 2004, vol. 193, 3973-4000
- **KEMMLER, R.** ; **LIPKA, A.** ; **RAMM, E.** Large deformations and stability in topology optimization.. *Struct Multidisc Optim*, 2005, vol. 30, 459-476
- **LINDGAARD, E** ; **DAHL, J.** On compliance and buckling objective functions in topology optimization of snap-through problems.. *Struct Multidisc Optim*, 2013, vol. 47, 409-421
- **LINDGAARD, E.** ; **LUND, E.** Nonlinear Buckling Optimization of Composite Structures.. *Computer Methods in Applied Mechanics and Engineering*, 2010, vol. 199 (37-40), 2319-2330
- **LINDGAARD, E.** ; **LUND, E.** A unified approach to nonlinear buckling optimization of composite structures.. *Computers & Structures*, 2011, vol. 89 (3-4), 357-370
- **ORTIGOSA, R.** ; **RUIZ, D.** ; **GIL, A.J.** ; **DONOSO, A.** ; **BELLIDO, J.C.** A stabilisation approach for topology optimisation of hyperelastic structures with the SIMP method. *Computer Methods in Applied Mechanics and Engineering*, 2020, vol. 364, 112924
- **OHSAKI, M.** ; **NISHIWAKI, S.** Shape design of pin-jointed multistable compliant mechanisms using snapthrough behavior.. *Struct Multidisc Optim*, 2005, vol. 30, 327-334
- **KLARBRING, A.** ; **STRÖMBERG, N.** Topology optimization of hyperelastic bodies including non-zero prescribed displacements.. *Struct Multidisc Optim*, 2013, vol. 47, 37-48
- **HENRICHSEN, S.R.** ; **WEAVER P.M.** ; **LINDGAARD, E.** ; **LUND, E.** Post-buckling optimization of composite structures using Koiter's method.. *International Journal for Numerical Methods in Engineering*, 2016, vol. 108, 902-940
- **LIGUORI, F. S.** ; **ZUCCO, G.** ; **MADEO, A.** ; **MAGISANO, D.** ; **LEONETTI, L** ; **GARCEA, G.** ; **WEAVER, P. M.** Postbuckling optimisation of a variable angle tow composite wingbox using a multi-modal Koiter approach.. *Thin-Walled Structures*, 2019, vol. 138, 183-198
- **LIANG, K** ; **ZHOU, Z**. An efficient method for postbuckling optimization of composite laminated plates with holes under compression and shear loading.. *Acta Astronautica*, 2022, vol. 130, 444-453
- **LUND, E.** Buckling topology optimization of laminated multi-material composite shell structures.. *Composite Structures*, 2009, vol. 91, 158-167
- **FERRARI, F.** ; **SIGMUND, O.** A strategy for avoiding spurious localized buckling modes in topology optimization.. *International Journal for Numerical Methods in Engineering*, 2023, vol. 124, 4118-4140
- **FERRARI, F.** ; **SIGMUND, O.** Revisiting topology optimization with buckling constraints. *Struct Multidisc Optim*, 2019, vol. 59, 1401-1415
- **SIGMUND, O.** ; **MAUTE, K.** Topology optimization approaches.. *Structural and Multidisciplinary Optimization*, 2013, vol. 48, 1031-1055
- **ABAQUS**. *SIMULIA User Assistance. Dassault Systèmes.*, 2024
- **RIKS, E.** On the Purpose and Limitations of Buckling Analysis. *International Conference on Buckling and Postbuckling Behaviour of Composite Laminated Shell Structures*, 2008

- **TOSCA.** SIMULIA User Assistance.. *Dassault Systèmes.*, 2024
- Parameter Sensitivity in Nonlinear Mechanics. **KLEIBER, M.** ; **ANTUNEZ, H.** ; **HIEN, T. D.** ; **KOWALCZYK, P.** Theory and Finite Element Computations. John Wiley and Sons, 1997
- **CHOI, K. K** ; **KIM, N. H**. Structural Sensitivity Analysis and Optimization 2: Nonlinear Systems and Applications. Springer-Verlag, 2005
- **MICHALERIS, P.** ; **TORTORELLI, D. A.** ; **VIDAL, C. A.** Tangent Operators and Design Sensitivity Formulations for Transient Non-linear Coupled Problems with Applications to Elasto-Plasticity. *International Journal for Numerical Methods in Engineering*, 1994, vol. 37, 2471-2499